# EUROPÄISCHE PATENTSCHRIFT

(11) **EP 3 790 768 B1**
(45) Veröffentlichungstag und Bekanntmachung des Hinweises auf die Patenterteilung: **03.04.2024**
(21) Anmeldenummer: 19725049.1
(22) Anmeldetag: 09.05.2019
(51) Int. Cl.: B60R 11/04

(54) **VORRICHTUNG UND VERFAHREN ZUM BETREIBEN EINER OBJEKTERKENNUNG FÜR DEN INNENRAUM EINES KRAFTFAHRZEUGS SOWIE EIN KRAFTFAHRZEUG**
DEVICE AND METHOD FOR OPERATING AN OBJECT DETECTION SYSTEM FOR THE PASSENGER COMPARTMENT OF A MOTOR VEHICLE, AND A MOTOR VEHICLE
DISPOSITIF ET PROCÉDÉ SERVANT À FAIRE FONCTIONNER UNE IDENTIFICATION D'OBJETS POUR L'HABITACLE D'UN VÉHICULE AUTOMOBILE, ET VÉHICULE AUTOMOBILE

(30) Priorität: 09.05.2018 DE 102018111239
(43) Veröffentlichungstag der Anmeldung: 17.03.2021
(73) Patentinhaber: Motherson Innovations Company Limited, London EC2N 2AX (GB)
(72) Erfinder: WIECZOREK, Romeo, 70327 Stuttgart (DE)
(74) Vertreter: Weber-Bruls, Dorothée
(86) Internationale Anmeldenummer: PCT/EP2019/061933
(87) Internationale Veröffentlichungsnummer: WO 2019/215286

(56) Entgegenhaltungen:
- WO-A1-2016/067082
- US-A1- 2012 098 968
- US-B1- 6 678 598
- US-B2- 9 552 524

## Beschreibung

Die Erfindung betrifft eine Objekterkennungsvorrichtung zur Erkennung zumindest eines, sich insbesondere bewegenden, Objekts, vorzugsweise bereitgestellt von einem Fahrzeuginsassen oder in Form zumindest eines Teils des Fahrzeuginsassen, im Innenraum eines Kraftfahrzeugs, die ein Kamerasystem, das zumindest einen Sensor zur Umwandlung elektromagnetischer Strahlung in elektrische Signale und eine Leuchteinrichtung mit zumindest einer Leuchtquelle sowie einem Optiksystem umfasst, eine Steuer- oder Regeleinrichtung, die dazu ausgelegt ist, die elektrischen Signale von dem Kamerasystem und/oder Daten von zumindest einem Sensor, zumindest einem weiteren Gerät und/oder zumindest einer Einrichtung des Kraftfahrzeugs zu empfangen, Steuerbefehle zu generieren sowie an das Kamerasystem, das weitere Gerät und/oder die Einrichtung des Kraftfahrzeugs zu senden, umfasst, sowie ein Verfahren zum Betreiben solch einer Objekterkennungsvorrichtung und ein Kraftfahrzeug mit solch einer Erkennungsvorrichtung oder zur Durchführung besagten Verfahrens.

In modernen Kraftfahrzeugen wird eine zunehmende Anzahl elektronischer (digitaler) Anzeigeflächen und Assistenzsysteme verbaut, die zum Einen die klassische analoge Instrumentierung des Kraftfahrzeugs ersetzen und zum Anderen zusätzliche Informationen, wie beispielweise Kartenansichten, Bedienoberflächen für Unterhaltungs- und Telekommunikationssysteme und dergleichen bereitstellen können, sowie die Steuerung und die Kontrolle verschiedener Fahrzeugsysteme, insbesondere basierend auf dem Zustand der Fahrzeuginsassen, übernehmen oder dabei unterstützen.

Es hat sich herausgestellt, dass die Bedienung solcher Anzeigeflächen und Assistenzsysteme durch klassische Eingabegeräte, wie beispielsweise Tasten, Joysticks, Touchpads oder dergleichen, sehr komplex ist und daher einerseits zu Fehleingaben seitens des Fahrers führen kann und andererseits ein hohes Ablenkungsrisiko für den Fahrer mit sich bringt.

Aus diesem Grunde ist es wünschenswert, möglichst einfache berührungsfreie Eingabemethoden bereitzustellen. So ist beispielsweise aus der US 9 244 527 B2 eine kamerabasierte Bedienvorrichtung für eine blickrichtungsabhängige Gestensteuerung bekannt. Die Blickrichtung des Benutzers wählt dabei ein Zielgerät oder eine Funktion aus, welche von einer folgenden Gesteneingabe betroffen sein soll.

Es kommt in Fahrzeugen beispielsweise ein neues Kamerasystem zum Einsatz, das über eine Lichtquelle verfügt und den Bereich vor der Kamera aktiv beleuchten kann. Sogenannte Time-offlight-Kameras (TOF-Kameras) sind dabei bekannt, bei denen die Zeit zwischen einer Lichtemission der Lichtquelle der TOF-Kamera und die Registrierung der Reflexion am Kamerasensor des Kamerasystems gemessen wird. Daraus lässt sich der Abstand der reflektierenden Oberfläche zu den jeweiligen Pixeln des Kamerasystems bestimmen.

Gerade in modernen und zukünftigen Kraftfahrzeugen kann das Kraftfahrzeug selbst die Navigation und die Steuerung der meisten Fahrzeugeinrichtung als sogenanntes autonomes Kraftfahrzeug übernehmen. Der Fahrzeuginsasse kann dann, je nach Situation, teilweise oder komplett von der Führung des Kraftfahrzeugs entbunden werden. Bei fortgeschrittenen Systemen ist es auch möglich, dass keiner der Fahrzeuginsassen aufmerksam für die in der Umgebung stattfindenden und vom Kraftfahrzeug ausgelösten Vorgänge sein muss. Daher kann sich jeder Fahrzeuginsasse auf andere Sachen, zum Beispiel auf Anzeigeeinrichtungen zur persönlichen Unterhaltung, konzentrieren, sich entspannen oder sogar schlafen. Weiterhin kann der Fahrzeuginsasse seine Sitzposition und seine Sitzausrichtung beliebig einstellen, um zum Beispiel zu liegen und/oder sich anderen Fahrzeuginsassen oder Anzeigeeinrichtungen zuzuwenden.

Es hat sich jedoch herausgestellt, dass für die Objekterkennung mittels TOF-Kamera die Entfernung des zu analysierenden Objekts, wie zum Beispiel die Hand oder der Kopf einer Person, zu dem Kamerasystem eine entscheidende Rolle bei der eindeutigen Identifizierung einer Geste, einer Blickrichtung, einer Kopfposition und -bewegung und/oder einer Mimik spielt. Insbesondere wird mit zunehmendem Abstand zum Kamerasystem die Schwierigkeit erhöht, eine eindeutige Aussage über das Objekt zu treffen, so dass es auch vielfach zu Fehlbedienungen und -erkennungen kommen kann. Insbesondere kann es vorkommen, dass fälschlicherweise zufällige Gesten, die an sich nicht als Bedieneingaben gedacht sind, als solche erkannt werden, sodass der Inhalt von Anzeigeflächen oder der Zustand von Assistenzsystemen ungewollt durch einen Fahrzeuginsassen, insbesondere den Fahrer des Kraftfahrzeugs, verändert wird. Eine weitere häufige Fehlerquelle ist die Nicht-Erkennung einer Geste oder einer Kopfbewegung. Der Grund für solche Fehler ist vor allem die fehlende Ausleuchtung des Tiefenbereichs. Dadurch kann das Kamerasystem keine ausreichenden Daten liefern, die es dem Objekterkennungssystem erlauben, eine eindeutige Aussage über den Zustand des Objekts zu treffen. Insbesondere durch die vielfältigen Möglichkeiten des Verstellens der Sitzposition kann es dazu kommen, dass das Objekt nicht genügen ausgeleuchtet werden kann und/oder das Objekt nicht vollständig im Erfassungsbereich des Kamerasystems liegt. Eine Erhöhung der Lichtleistung von Leuchteinrichtungen ist nicht in allen Fällen möglich. So wird die Lichtleistung, die zur Verfügung gestellt werden kann, von verschiedenen Faktoren begrenzt. Einige davon sind der zur Verfügung stehende Bauraum, die zur Verfügung stehende Stromversorgung, die produzierte Abwärme und die Leistungsbegrenzung der Leuchteinrichtung.

Aus der US 6,441,363 B1 ist ein Fahrzeuginsassenerfassungssystem bekannt, das eine einzelne Laseranordnung, die an einer Fahrzeugstruktur montiert ist, umfasst, um einen ersten Strahl zu erzeugen, der auf eine erste Insassenzone gerichtet ist, einen zweiten Strahl, der auf eine zweite Insassenzone gerichtet ist, und einen dritten Strahl, der auf eine dritte Insassenzone gerichtet ist, wobei die ersten, zweiten und dritten Strahlen alle von im Allgemeinen der gleichen Position auf der Fahrzeugstruktur erzeugt werden. Ferner sind eine erste Sensoranordnung zum Empfangen von Reflexionsstrahlen, die sich aus dem ersten Strahl ergeben, der auf einen ersten Abschnitt eines in der ersten Zone befindlichen Insassen trifft, wobei die erste Sensoranordnung ein erstes Signal erzeugt, das proportional den ersten Abschnitt des in der ersten Zone vorhandenen Insassen darstellt; eine zweite Sensoranordnung zum Empfangen von Reflexionsstrahlen, die sich aus dem zweiten Strahl ergeben, der auf einen zweiten Abschnitt des in der zweiten Zone befindlichen Insassen trifft, wobei die zweite Sensoranordnung ein zweites Signal erzeugt, das proportional den zweiten Abschnitt des in der zweiten Zone vorhandenen Insassen darstellt; und eine dritte Sensoranordnung zum Empfangen von Reflexionsstrahlen, die sich aus dem dritten Strahl ergeben, der auf einen dritten Abschnitt des in der dritten Zone befindlichen Insassen trifft, wobei die dritte Sensoranordnung ein drittes Signal erzeugt, das proportional den dritten Abschnitt des in der dritten Zone vorhandenen Insassen darstellt; vorgesehen. Ein zentraler Prozessor zum Empfangen der ersten, zweiten und dritten Signale und Kombinieren der Signale dient dazu, die Position des Insassen innerhalb des Fahrzeugs zu bestimmen.

Bei einer Vorrichtung zur berührungslosen Erfassung von Gegenständen und/oder Personen und von diesen ausgeführten Gesten und/oder Bedienvorgängen ist dieselbe gemäß der WO 2013/001084 A1 in einem Fahrzeuginnenraum angeordnet und umfasst zumindest eine Beleuchtungseinheit, eine Anzeigeeinheit und eine optische Erfassungseinheit, wobei die Beleuchtungseinheit aus zumindest einem Infrarot-Laser, insbesondere einer Infrarot-Laser-Diode, gebildet ist. Dabei sind insbesondere mittels der optischen Erfassungseinheit ein Gegenstand und/oder eine Person und/oder von dieser Person ausgeführte Gesten und/oder Bedienvorgänge dreidimensional erfassbar. Beispielsweise wird somit eine Bewegung einer Hand oder eines Fingers eines Fahrzeugführers dreidimensional erfasst, welche beispielweise einer virtuellen Betätigung einer Anzeigeeinheit im Fahrzeug entspricht. Dabei kann es sich um die Erfassung eines Bedienvorgangs mit einer Geste, wie beispielsweise ein Hin- und Herbewegen eines Fingers oder eine Wischbewegung oder Öffnen der Hand als Zoombewegung, handeln. Durch den Einsatz von Infrarot-Laser-Dioden sollen eine verbesserte Kohärenz und eine höhere spektrale Leistungsdichte vorliegen, woraus eine höhere Modulationsbandbreite und eine effektivere optische Filterung resultieren soll.

US 2008/0048887 A1 betrifft u.a. ein Fahrzeuginsassenerfassungssystem, umfassend ein Fotografiersystem, umfassend: eine erste Lichtquelle zum Aussenden von Strahlungslicht auf ein erstes Objekt, eine zweite Lichtquelle zum Aussenden von Strahlungslicht auf ein zweites Objekt, das sich vom ersten Objekt unterscheidet; eine Antriebseinheit zum Antreiben der ersten Lichtquelle und der zweiten Lichtquelle zum Umschalten zwischen einer ersten Betriebsart, in der die Lichtmenge der ersten Lichtquelle größer ist als die der zweiten Lichtquelle, und einer zweiten Betriebsart, in der die Lichtmenge der zweiten Lichtquelle größer ist als die der ersten Lichtquelle; eine Fotoeinheit, die ein optisches System und einen Abbildungschip aufweist, um Bilder des ersten Objekts und des zweiten Objekts, die ganz oder teilweise übereinander angeordnet sind, auf einen vorbestimmten Abbildungsbereich des Abbildungschips zu projizieren, indem die am ersten Objekt und zweite Objekt reflektierten Lichter durch das optische System in den Abbildungschip eintreten können; einen Schattenfilter zum Blockieren eines Teils der einfallenden Lichter, die in den Bildchip eintreten; und einen Steuerungs-/Berechnungsprozessor zur Ausgabe eines auf den vorbestimmten Bildbereich projizierten Bildes als Bildinformation, wobei, wenn sich die Antriebseinheit in der ersten Betriebsart befindet, blockiert der Beschattungsfilter Licht mit einer geringeren Menge als das einfallende Licht, das von der ersten Lichtquelle emittiert und am ersten Objekt reflektiert wird, um in den Bildchip einzutreten, und der Steuerungs-/Berechnungsprozessor gibt, basierend auf der Betriebsart der Antriebseinheit, ein auf die vorbestimmte Abbildungsfläche des Bildchips projiziertes Bild als Bildinformation über das erste Objekt aus, und, wenn sich die Antriebseinheit in der zweiten Betriebsart befindet, blockiert der Schattierungsfilter Licht einer geringeren Menge als das einfallende Licht, das von der zweiten Lichtquelle emittiert und am zweiten Objekt reflektiert wird, um in den Bildchip einzutreten, und, basierend auf der Betriebsart der Antriebseinheit, gibt der Steuerungs-/Berechnungsprozessor ein Bild aus, das auf die vorbestimmte Abbildungsfläche des Bildchips projiziert wird, als Bildinformation des zweiten Objekts. Zudem ist ein Erfassungsprozessor zum Erfassen von Informationen über den Fahrzeuginsassen, wie Körperbau, Position oder Haltung des Fahrzeuginsassen, basierend auf den Bildinformationen über entweder den ersten Fahrzeuginsassen oder den zweiten Fahrzeuginsassen, die vom Steuerungs-/ Berechnungsprozessor des Fotosystems ausgegeben werden, vorgesehen.

Aus der US 6 678 598 B1 ist eine Vorrichtung zur Sitzüberwachung in Kraftfahrzeugen mit folgenden Merkmalen: einer gepulst betriebenen monochromatischen Lichtquelle zum kurzzeitigen Belichten eines zu überwachenden Raums; einem Bildsensorarray zum Aufzeichnen eines Bilds des zu überwachenden Raums, mit einer globalen elektronischen Verschlußeinrichtung, die eine Einstellung der Belichtungszeit des Bildsensorarrays unabhängig von einem Auslesetakt des Bildsensorarrays ermöglicht; einer Synchronisationseinrichtung zum Synchronisieren des Betriebs der gepulst betriebenen Lichtquelle und des Bildsensorarrays; und einer Steuereinrichtung zum Steuern der Lichtquelle und des Bildsensorarrays, um während einer Belichtung des zu überwachenden Raums zu einer ersten Zeit ein erstes Bild desselben zu erzeugen, und um ohne eine Belichtung des zu überwachenden Raums zu einer zweiten Zeit ein zweites Bild desselben zu erzeugen; und einer Einrichtung zum Erzeugen eines Differenzbilds aus dem ersten und dem zweiten Bild.

Es ist die Aufgabe der vorliegenden Erfindung, die gattungsgemäße Objekterkennungseinrichtung derart weiterzuentwickeln, dass sie die Nachteile des Stands der Technik überwindet. Insbesondere soll die Erkennung des Zustands von Objekten innerhalb des Kraftfahrzeugs zuverlässiger und somit die Bedienung von Anzeigeflächen und Assistenzsystemen im Kraftfahrzeug erleichtert werden.

Diese Aufgabe wird durch eine Vorrichtung nach Anspruch 1 und/oder ein Verfahren nach Anspruch 10 gelöst, bei der die Leuchteinrichtung durch zumindest ein optisches Element des Optiksystems und/oder zumindest eine zusätzliche Leuchteinrichtung und/oder ein zusätzliches Kamerasystem, vorzugsweise jeweils in der Nähe des Objektes positioniert, bestimmte Bereiche, insbesondere ein Nahfeld und ein Fernfeld, im Kraftfahrzeug so ausleuchten kann, dass durch das Kamerasystem zu einer Vielzahl von Objektpunkten in den Bereichen zumindest eine in den elektrischen Signalen enthaltende Entfernungsinformation erfassbar ist, wobei die Ausleuchtung, die Objektlokalisierung und/oder -erkennung und/oder die Aktivierung zumindest einer der Leuchteinrichtungen und/oder Kamerasysteme vom Zustand des Kraftfahrzeugs, bestimmt durch Geschwindigkeit, Beschleunigung, Fahrzeugsitzbelegung, Fahrzeugsitzposition, Fahrzeugsitzausrichtung und/oder Beleuchtung, insbesondere die Beleuchtung des Fahrzeuginnenraums, und/oder vom Zustand der Umgebung des Kraftfahrzeugs, bestimmt durch das Wetter, Tag, Nacht, Fahrbahn, Verkehrszeichen und/oder Verkehrssituation, bestimmt ist.

Weitere vorteilhafte Ausführungsformen sind in den folgenden Beispielen beschrieben:
Eine Ausführungsform beschreibt ein Objekterkennungsvorrichtung, bei der die Leuchteinrichtung des Kamerasystems, die zusätzliche Leuchteinrichtung und/oder die Leuchteinrichtung des zusätzlichen Kamerasystems mehr als eine Leuchtquelle umfasst bzw. umfassen, wobei vorzugsweise jede Leuchtquelle, insbesondere unabhängig voneinander, in Abhängigkeit von dem Zustand des Objekts, des Kraftfahrzeugs und/oder der Umgebung des Kraftfahrzeugs und/oder der Entfernung des Objekts zum Kamerasystem, insbesondere des Sensors des Kamerasystems, und/oder zum zusätzlichen Kamerasystem, insbesondere des Sensors des zusätzlichen Kamerasystems, aktivierbar ist.

Eine Objekterkennungsvorrichtung nach einem der vorhergehenden Beispiele ist dadurch gekennzeichnet, dass die Steuer- oder Regeleinrichtung die Ausleuchtung von verschiedenen Bereichen im Innenraum des Kraftfahrzeugs basierend auf dem Zustand des Objekts, des Kraftfahrzeugs und/oder der Umgebung des Kraftfahrzeugs und/oder der Entfernung des Objekts zum Kamerasystem, insbesondere des Sensors des Kamerasystems, und/oder zum zusätzlichen Kamerasystem, insbesondere des Sensors des zusätzlichen Kamerasystems, verändert.

Eine weitere Objekterkennungsvorrichtung nach einem der vorhergehenden Beispiele ist dadurch gekennzeichnet, dass die Ausleuchtung, die Objektlokalisierung und/oder -erkennung und/oder die Aktivierung zumindest einer der Leuchteinrichtungen und/oder Kamerasysteme vom Zustand des Objekts, vorzugsweise bestimmt durch Größe, Gewicht, Atmung, Herzschlag, Temperatur, Beschleunigung, Bewegung und/oder körperlichen Fitheit des Fahrzeuginsassen, bestimmt ist.

Eine Objekterkennungsvorrichtung nach einem der vorhergehenden Beispiele, dadurch gekennzeichnet, dass die Leuchteinrichtung des Kamerasystems, die Leuchteinrichtung des zusätzlichen Kamerasystems, die zusätzliche Leuchteinrichtung, das Kamerasystem und/oder das zusätzliche Kamerasystem in einem Armaturenbrett, einer Mittelkonsole, insbesondere eine versenk- oder verfahrbaren Mittelkonsole, einer Windschutzscheibe, einem Dach, einem Dachhimmel, einem Haltegriff, einer A-Säule, einer B-Säule, einer C-Säule, einer Türkomponente, oberhalb einer Tür, einem Gehäuse, insbesondere ein kuppelförmiges Gehäuse im Bereich der Fahrzeugmitte am Dach oder Dachhimmel, einer Anzeigeeinrichtung, einem Fahrzeuginsassensitz, insbesondere einem Kopfteil, einem Fußteil und/oder einer Armlehne des Fahrzeuginsassensitzes, einem Rückhaltesystem für den Fahrzeuginsassen, einem Positionierungsmechanismus, insbesondere einem motorbetriebenen Positionierungsmechanismus, einer Verkleidung und/oder dem Gerät, insbesondere in Form eines mobilen Geräts des Objekts, angebracht oder darin integriert ist.

Eine weitere Objekterkennungsvorrichtung nach dem vorhergehenden Beispiel ist dadurch gekennzeichnet, dass die in der Anzeigeeinrichtung integrierte Leuchteinrichtung über einen Anzeigebereich der Anzeigeeinrichtung verteilte Leuchtquellen umfasst, wobei die Leuchtquellen der Anzeigeeinrichtung Gruppen von Emittern und/oder Regionen mit unterschiedlichen spektralen Emissionsbereichen umfassen, die dazu ausgelegt sind, Licht in zumindest einen Teil eines für die Objekterkennung genutzten Spektralbereichs bereitstellen zu können, und/oder zusätzlich spektrale Emitter für den Spektralbereich der Objekterkennung umfassen.

Eine weitere Objekterkennungsvorrichtung nach einem der vorhergehenden Beispiele ist dadurch gekennzeichnet, dass das Optiksystem Führungen und/oder rotierende Räder zum Austauschen und/oder Verschieben des optischen Elements und/oder Aktuatormittel zur Induktion von Bewegungen umfasst, und/oder das optisches Element des Optiksystems Linsen, Filter, adaptive Optiken, aktive optische Elemente und/oder Spiegel umfasst.

Eine Objekterkennungsvorrichtung nach der Erfindung umfasst eine Rechner- oder Kontrolleinheit, die zur Auswertung der elektrischen Signale und/oder der Daten durch einen Objektlokalisierungsalgorithmus und/oder einen Objekterkennungsalgorithmus ausgelegt ist.

Eine Objekterkennungsvorrichtung nach der Erfindung ist zudem oder alternativ dadurch gekennzeichnet, dass die Steuer- oder Regeleinrichtung dazu ausgelegt ist, das Kamerasystem, das zusätzliche Kamerasystem, die Leuchteinrichtung des Kamerasystems, die zusätzliche Leuchteinrichtung, die Leuchteinrichtung des zusätzlichen Kamerasystems, zumindest einen Sensor, die Einrichtung und/oder das Gerät, insbesondere umfassend das mobile Gerät, zu steuern und/oder zu koordinieren.

Eine Objekterkennungsvorrichtung nach einem der vorhergehenden Beispiele ist dadurch gekennzeichnet, dass die Ausleuchtung bestimmbar ist über die spektrale Frequenz, Amplitude, Dauer, insbesondere bestimmt durch Pulsfrequenz und/oder Pulslänge, Polarisation und/oder Intensität der Beleuchtung, wobei vorzugsweise die spektrale Frequenz oberhalb und/oder unterhalb des sichtbaren Lichts liegt.

Ein erfindungsgemäßes Verfahren zum Betreiben einer Objekterkennungsvorrichtung nach einem der vorhergehenden Ansprüche ist gekennzeichnet durch eine Signal- und/oder Datenaufnahme, Objektlokalisierung, Anpassung der Ausleuchtung des Objekts, Objekterkennung und/oder Steuerbefehl erzeugung.

Bei einer Ausführungsform des Verfahrens wird vor der Signal- und/oder Datenaufnahme eine Aufnahme von Hintergrunddaten und/oder eine Verbindung mit dem Gerät, dem Sensor und/oder der Einrichtung durchgeführt.

Ein erfindungsgemäßes Kraftfahrzeug, insbesondere ein selbstfahrendes Kraftfahrzeug, ist mit einer Objekterkennungsvorrichtung nach einem der vorangehenden Beispiele ausgestattet und/oder zum Durchführen eines Verfahrens nach einem der vorangehenden Beispiele geeignet.

Eine Ausführungsform des Kraftfahrzeugs kann auch dadurch gekennzeichnet sein, dass die Einrichtung zum autonomen Fahren ausgelegt ist, und/oder die Steuer- oder Regeleinrichtung zum Einstellen der Position des Fahrzeuginsassen im Fahrzeuginnenraums, insbesondere über den Fahrzeuginsassensitz, der Anzeigeeinrichtung, des Armaturenbretts, der Mittelkonsole insbesondere einer versenk- oder verfahrbarer Mittelkonsole, einer Fahrzeugöffnung, einer Warneinrichtung, einer Wärmeeinrichtung, einer Klimaeinrichtung, eines Navigationssystems, einer Audioanlage, einer Telefonanlage, einer Videoanlage, einer Hologrammanlage und/oder des Positioniermechanismus ausgelegt ist.

Ein Kraftfahrzeug nach einem der vorangehenden Beispiele kann auch dadurch gekennzeichnet sein, dass der Positioniermechanismus in Wirkverbindung mit dem Fahrzeuginsassensitz, der Anzeigeeinrichtung, dem Armaturenbrett, der Mittelkonsole, der Fahrzeugöffnung, der Warneinrichtung, der Wärmeeinrichtung, der Klimaeinrichtung, dem Navigationssystem, der Audioanlage, der Telefonanlage, der Videoanlage und/oder der Hologrammanlage steht oder bringbar ist.

Vorteilhafterweise umfasst eine erfindungsgemäße Objekterkennungseinrichtung für den Innenraum eines Kraftfahrzeugs zumindest ein Kamerasystem und eine Steuer- oder Regeleinrichtung.

Bei dem Kamerasystem handelt es sich bevorzugt um ein Kamerasystem, das dazu ausgelegt ist, zu jedem Bildpunkt eine Entfernungsinformation mitliefern zu können, sodass die Objekterkennung besonders präzise wird. Dabei umfasst das Kamerasystem zumindest eine Kamera und eine Leuchteinrichtung, um die zu erfassende Umgebung zu beleuchten. Bevorzugt handelt es sich bei dem Kamerasystem um ein Tiefenbildkamerasystem, besonders bevorzugt umfassend eine TOF- Kamera. Durch das Aussenden von Licht und die Messung der Laufzeit der Reflexion lässt sich somit der Abstand einzelner Pixel zum Kamerasystem bestimmen. Jedoch ist auch die Benutzung andere Kamerasysteme zur räumlichen, dreidimensionalen Erkennung, wie zum Beispiel Stereokameras, Lichtfeldkameras, Triangulationssysteme, Interferometriesysteme oder Scannersysteme, insbesondere ein Streifenlichtscanner, möglich. Die Gemeinsamkeit aller benutzten Kamerasysteme liegt hier in der zusätzlichen Beleuchtung, um Objekte in verschiedenen Abständen besser erkennen zu können.

Sendet die Leuchteinrichtung des Kamerasystems und/oder eine zusätzliche Leuchteinrichtung Licht im nicht sichtbaren Spektralbereich, insbesondere im Infrarotbereich, aus, wird ein Fahrzeuginsasse durch das Licht der Leuchteinrichtung des Kamerasystems und/oder der zusätzlichen Leuchteinrichtung nicht geblendet, während trotzdem eine hohe Leistung für die Objekterkennung bereitgestellt werden kann. Besonders vorteilhaft ist es, wenn verschiedene Spektralbereiche, im sichtbaren und im nicht sichtbaren Spektralbereich, für die Objekterkennung genutzt werden können.

Das Kamerasystem umfasst vorteilhafterweise einen Sensor, bevorzugt einen optischen Sensor wie einen CMOS oder CCD-Sensor, der auftreffende elektromagnetische Strahlung in elektrische Signale umwandeln kann, sowie ein Optiksystem, um die elektromagnetische Strahlung auf den Sensor zu leiten.

Um die Tiefenausleuchtung zu verbessern, kann eine Leuchteinrichtung, zum Beispiel eine Leuchteinrichtung eines Kamerasystems und/oder eine zusätzliche Leuchteinrichtung, die nicht innerhalb oder in der Nähe des Kamerasystems positioniert sein muss bzw. müssen, eine anpassbare bzw. variable Licht- und Helligkeitsverteilung bereitstellen, um Licht in verschiedene Bereiche des Fahrzeuginnenraums zu senden, so dass in den verschiedenen Bereichen des Fahrzeuginnenraums die benötigte Helligkeit zur Objekterkennung erreicht wird. Dabei kann der zu beleuchtende bzw. der zu beobachtende Bereich ein Nahfeld und ein Fernfeld umfassen. Nahfeld und Fernfeld sind hier relative Begriffe, die durch die Größe und die Form des zu beleuchtenden Bereichs definiert werden, wobei das Nahfeld einen Teilbereich mit einem kürzeren Abstand zur Leuchteinrichtung und/oder zum Kamerasystem umfasst und das Fernfeld einen Teilbereich mit dem weiteren Abstand zur Leuchteinrichtung und/oder zum Kamerasystem umfasst. Nahfeld und Fernfeld können sich auch in zumindest einem Bereich überlappen.

Eine variable Lichtverteilung kann beispielsweise durch ein anpassbares Optiksystem, das mindestens ein optisches Element wie eine oder mehrere Linsen umfasst, hervorgerufen werden. Durch die Veränderung der Ausrichtung und/oder des Abstands der optischen Elemente des Optiksystems kann die Lichtemission der Leuchteinrichtung an verschiedene räumliche und situative Gegebenheiten angepasst werden. Alternativ oder zusätzlich kann auch eine Leuchteinrichtung, die mehrere unabhängig steuerbare Leuchtquellen umfasst, mit einem Optiksystem verwendet werden. Dabei sind die Leuchtquellen vorteilhafterweise gemeinsam angeordnet, insbesondere als Matrix. Das Optiksystem stellt für die verschiedenen Leuchtquellen verschiedene Optiksysteme bereit, so dass jede Leuchtquelle durch die Wahl von optischen Elementen derart konfigurierbar ist, dass sie alleine oder kombiniert mit anderen einen bestimmten Bereich in besonders vorteilhafter Art und Weise ausleuchten kann. Dabei kann es vorgesehen sein, dass die Ausrichtung und/oder der Abstand der optischen Elemente des Optiksystems nicht verändert werden muss, um eine für die Objekterkennung vorteilhafte Ausleuchtung zu erreichen, sondern die anpassbare bzw. variable Lichtverteilung dadurch erreicht wird, dass die verschiedenen Leuchtquellen unabhängig voneinander ein- und ausgeschaltet sowie mit unterschiedlichen Parametern, wie zum Beispiel Leistung, Spektralbereich, Pulsfrequenz, Pulslänge, Polarisation und anderen leuchtquellenspezifischen Parametern, betrieben werden können. Durch die Verwendung mehrerer Leuchtquellen kann man somit die benötigte räumliche Ausleuchtung additiv aus mehreren Leuchtquellen zusammensetzen. Insbesondere ist die Ausleuchtung bestimmbar über die spektrale Frequenz, Amplitude, Dauer, insbesondere bestimmt durch Pulsfrequenz und/oder Pulslänge, Polarisation und/oder Intensität der Beleuchtung, wobei vorzugsweise die spektrale Frequenz oberhalb und/oder unterhalb des sichtbaren Lichts liegt.

Optische Elemente umfassen beispielsweise Linsen, Filter, adaptive Optiken wie zum Beispiel verformbare Spiegel, aktive optische Elemente, wie zum Beispiel einen optischen Modulator, insbesondere einen akustooptischen Modulator oder einen elektrooptischen Modulator, und/oder Spiegel. Weiterhin kann das Optiksystem Führungen und/oder rotierende Räder, wie beispielsweise ein Filterrad, zum Austauschen und /oder Verschieben optischer Elemente, aber auch Aktuatormittel zur Induktion von Bewegungen, umfassen.

Die Steuer- oder Regeleinrichtung ist dazu ausgelegt, Daten zu empfangen und zu senden, sowie basierend auf Roh- und/oder verarbeiteten Daten, Steuerbefehle zu generieren und an andere Geräte weiterzugeben. Insbesondere ist die Steuer- oder Regeleinrichtung dazu geeignet, verschiedene Kamerasysteme, Leuchteinrichtungen, Sensoren und/oder andere Geräte zu steuern und zu koordinieren, um geeignete Daten für die Objektlokalisierung und/oder -erkennung zu erhalten. Im Speziellen ist es bei TOF-Kameras erforderlich, die Lichtemission von Leuchteinrichtungen mit der Bildaufnahme der Kamera zu koordinieren.

Weiterhin kann eine Rechner- oder Kontrolleinheit vorgesehen sein. Die Rechner- oder Kontrolleinheit wertet von der Steuereinheit gelieferten Daten aus und gibt diese anschließend an die Steuer- oder Regeleinrichtung und/oder andere Geräte weiter. Die Rechner- oder Kontrolleinheit kann auch eine Untereinheit der Steuer- oder Regeleinrichtung sein und/oder bereits in ihr integriert sein. Zur Auswertung der Daten können verschiedene Auswertealgorithmen angewendet werden, insbesondere ein Objektlokalisierungsalgorithmus und ein Objekterkennungsalgorithmus. Vorteilhafterweise führt der Objektlokalisierungsalgorithmus auch eine Objektklassifizierung durch.

Ferner kann es vorgesehen sein, dass einzelne Bereiche der Leuchteinrichtung aktiviert werden, je nachdem, in welchem Bereich das zu erwartende Objekt positioniert ist. Dazu kann es vorgesehen sein, dass auch ein erstes Bild oder ein paar erste Bilder des Kamerasystems für eine grobe Objektlokalisierung benutzt werden können. Die Steuereinheit kann selektiv eine Reihe von geeigneten Sensoren, Kamerasystemen und/oder Leuchteinrichtungen aktivieren und die erhaltenen Daten an die Rechner- oder Kontrolleinheit senden. Die Rechner- oder Kontrolleinheit kann die Daten mithilfe eines Objektlokalisierungsalgorithmus verarbeiten und das Ergebnis der Objektlokalisierung an die Steuereinheit zurücksenden. Bei einem lokalisierten Objekt, wie zum Beispiel einem Fahrzeuginsassen, können dann die Bereiche genauer untersucht werden, in denen relevante Daten für die Objekterkennung gewonnen werden können. Dies können zum Beispiel die Bereiche um die Handflächen, die Füße, den Oberkörper, die Schultern und/oder den Kopf des Fahrzeuginsassen herum sein. Dazu wird dann die Leuchteinrichtung des Kamerasystems und/oder die zusätzlichen Leuchteinrichtungen basierend auf den ausgewerteten Daten der Objektlokalisierung aktiviert, um die relevanten Bereiche des zu erkennenden Objekts bevorzugt ausleuchten zu können. Weiterhin kann es auch vorgesehen sein, dass basierend auf anderen Fahrzeugdaten, wie zum Beispiel Sensordaten zu Sitzbelegung, Sitzposition und Sitzausrichtung sowie Daten über körperliche Merkmale und Eigenheiten des Fahrzeuginsassen, die Objektlokalisierung und/oder -erkennung durchgeführt und/oder die Leuchteinrichtungen aktiviert werden. Besonders vorteilhaft können Daten über die Ausrichtung, Position, Beschleunigung, Temperatur, den Zustand des Fahrzeuginsassensitzes und/oder Daten vom Fahrzeuginsassen, wie zum Beispiel Gewicht, Atmung, Herzschlag, Temperatur, Beschleunigung und/oder Bewegung benutzt werden, um eine Objektlokalisierung und/oder -erkennung durchzuführen bzw. anzuregen. Gerade die durch Sensoren, wie zum Beispiel einen Gewichtssensor und/oder einen Beschleunigungssensor, gewonnenen Daten, die eine Bewegung und/oder Gewichtsverlagerung eines Fahrzeuginsassen anzeigen, können dazu verwendet werden, eine Objektlokalisierung und/oder -erkennung zu starten. Die Objekterkennung kann mithilfe eines Objekterkennungsalgorithmus von der Rechner- oder Kontrolleinheit durchgeführt werden.

Sensoren können insbesondere dazu ausgelegt sein, Druck, Temperatur, Beschleunigung, Geschwindigkeit, elektromagnetische Felder, Gravitation, Licht, Gaszusammensetzung, Vibrationen, Ultraschall, Radiowellen, Mikrowellen, kosmische Strahlung sowie deren unterschiedlichen Eigenschaften zu messen.

Eine besonders vorteilhafte Ausgestaltung der Leuchteinrichtung kann auch durch eine Anzeigeeinrichtung realisiert werden. Eine Anzeigeeinrichtung wird primär dafür verwendet, Informationen für den Fahrzeuginsassen bereitzustellen, und sekundär, Eingaben vom Fahrzeuginsassen, zum Beispiel zum Steuern der Anzeigeeinrichtung oder zum Steuern von anderen Funktionen des Fahrzeugs, aufzunehmen. Dabei kann die Anzeigeeinrichtung mehrere zusätzliche Funktionen übernehmen. Zum einen kann eine Anzeigeeinrichtung als Leuchteinrichtung fungieren, indem sie Licht aussendet und somit der Bereich vor der Anzeigeeinrichtung beleuchtet wird. Befindet sich nun ein Objekt, wie zum Beispiel ein Kopf eines Fahrzeuginsassen, im Beleuchtungsfeld der Anzeigeeinrichtung, dann wird dieses zusätzlich beleuchtet und das Kamerasystem kann die Objekterkennung durch das zusätzliche Licht durchführen. Zum anderen kann die Anzeigeeinrichtung auch mit einer Kamera und/oder einem Kamerasystem ausgestattet sein. Durch die Steuerung der Steuer- oder Regeleinrichtung können Anzeigevorrichtung und Kamerasystem der Objekterkennungsvorrichtung gemeinsam und/oder einzeln die Objekterkennung durchführen. Dies ist besonders dann vorteilhaft, wenn das Kamerasystem durch die Position des Fahrzeuginsassen und/oder blockierende Objekte die Objekterkennung nicht durchführen kann, weil das zu erkennende Objekt nicht dem Kamerasystem zugewandt ist bzw. nicht vollständig im Erfassungsbereich des Kamerasystems liegt.

Durch die Positionierung der Anzeigeeinrichtung kann diese normalerweise zumindest den Bereich des Kopfes eines Fahrzeuginsassen erfassen. Alternativ oder zusätzlich kann die Anzeigeeinrichtung über eine zusätzlich integrierte oder extern positionierte Leuchteinrichtung verfügen. Hierbei ist es besonders vorteilhaft, wenn die Anzeigeeinrichtung über ihren Anzeigebereich verteilt Leuchtquellen für die Objekterkennung bereitstellt. Im Falle einer Anzeigeeinrichtung, die auf einer matrixartigen Verteilung von Leuchtquellen basiert, wobei die Leuchtquellen Gruppen von Emittern und/oder Regionen mit unterschiedlichen spektralen Emissionsbereichen umfassen, können zusätzlich spektrale Emitter für den Spektralbereich der Objekterkennung eingebracht werden und/oder die vorhandenen Gruppen von Emittern und/oder Regionen, die zumindest einen Teil des Spektralbereichs für die Objekterkennung bereitstellen können, aktiviert werden. Dabei kann ein solcher Emitter für eine Anzeigeeinrichtung auch eine absorbierende Region darstellen bzw. umfassen, bei der die spektrale Zusammensetzung des von einer Hintergrundlichtquelle emittierten Lichts durch die absorbierende Region bestimmt wird. Auch kann ein solcher Emitter eine durch die Absorption von Licht, insbesondere das Licht einer Hintergrundlichtquelle, ausgelöste Re-Emission in einem vom absorbierten Licht zumindest in Teilen unterschiedlichen Spektrum, umfassen. Ebenso ist eine Kombination, insbesondere auch eine Stapelung, von emittierenden, absorbierenden und re-emittierenden Regionen möglich.

Das Kraftfahrzeug umfasst dabei zumindest eine, vorteilhafterweise eine Vielzahl an verschiedenen, Einrichtung, insbesondere eine Einrichtung zum autonomen Fahren. Einrichtungen und/oder Einstellungen des Kraftfahrzeugs, die gesteuert, kontrolliert und/oder deren Einstellung und/oder Zustand geändert werden können, umfassen insbesondere die Position des Fahrzeuginsassen im Fahrzeuginnenraums, den Fahrzeuginsassensitz, die Anzeigeeinrichtung, das Armaturenbretts, eine Mittelkonsole insbesondere eine versenk- oder verfahrbare Mittelkonsole, eine Fahrzeugöffnung, eine Warneinrichtung, eine Wärme-einrichtung, eine Klimaeinrichtung, ein Navigationssystems, eine Audioanlage, eine Telefonanlage, eine Videoanlage, eine Hologrammanlage und/oder ein Positioniermechanismus.

Die Einrichtung zum autonomen Fahren ist dafür ausgelegt, das Fahrzeug, insbesondere alle Einrichtungen des Kraftfahrzeugs, autonom zu steuern und zu bedienen. Der Fahrzeuginsasse kann auch auf die Steuerung und Bedienung der Einrichtungen, insbesondere über die Steuer- oder Regeleinheit, zugreifen. Dabei kann es passieren, dass die Steuer- oder Regeleinheit die Einstellungen, die die Einrichtung zum autonomen Fahren gemacht hat, verändern kann. Genauso ist es aber auch möglich, dass die Steuer- oder Regeleinheit die Einstellung, die die Einrichtung zum autonomen Fahren gemacht hat, nicht verändern kann. Dieser situative Aspekt der Fahrzeugkontrolle soll Fehlbedienungen und Katastrophen, die durch falsche oder fehlerhafte Bedienung ausgelöst werden, verhindern. Gleichzeitig eröffnet es aber auch die Möglichkeit, Fehler, die durch die Einrichtung zum autonomen Fahren ausgelöst werden, zu korrigieren. Es wird erfindungsgemäß ein Verfahren zum Betreiben einer Objekterkennungsvorrichtung für den Innenraum eines Kraftfahrzeugs, welches insbesondere eine Mehrzahl von Kamerasystemen und/oder Leuchteinrichtungen umfasst, geliefert, bei dem zum Erkennen zumindest einer ersten Eingabehandlung eines Benutzers eine Objektlokalisierung und eine Objekterkennung durchgeführt wird, so dass das Objekt trotz Abstand und/oder Verdeckung von der Objekterkennungsvorrichtung erkannt wird.

Ein Kraftfahrzeug nach der Erfindung kann mit einer oder einer Mehrzahl von Anzeigevorrichtungen, zumindest einem Sensor zur Erfassung einer berührungslosen Eingabehandlung und einer Steuer- oder Regeleinrichtung, welche zum Durchführen eines erfindungsgemäßen Verfahrens der beschriebenen Art ausgebildet ist, ausgestattet sein.

Nachfolgend werden bevorzugte Ausführungsformen der vorliegenden Erfindung unter Bezug auf schematische Zeichnungen beispielhaft näher erläutert, in denen
- Fig. 1a, 1b: eine Explosionsansicht und eine Seitenansicht einer beispielhaften Leuchteinrichtung zeigen;
- Fig. 2: eine Teil-Seitenschnittansicht eines Kraftfahrzeugs mit einem ersten Ausführungsbeispiel einer erfindungsgemäßen Vorrichtung und Fahrzeuginsassen zeigt;
- Fig. 3: eine Teil-Seitenschnittansicht eines Kraftfahrzeugs mit einem zweiten Ausführungsbeispiel einer erfindungsgemäßen Vorrichtung und Fahrzeuginsassen zeigt;
- Fig. 4: eine Teil-Seitenschnittansicht eines Kraftfahrzeugs mit einem dritten Ausführungsbeispiel einer erfindungsgemäßen Vorrichtung und Fahrzeuginsassen zeigt;
- Fig. 5: eine Teil-Seitenschnittansicht eines Kraftfahrzeugs mit einem vierten Ausführungsbeispiel einer erfindungsgemäßen Vorrichtung und Fahrzeuginsassen zeigt;
- Fig. 6a-d: jeweils eine Draufsicht eines Kraftfahrzeugs mit einem fünften bis achten Ausführungsbeispiel der erfindungsgemäßen Vorrichtung zeigen;
- Fig. 7: eine Teil-Seitenschnittansicht eines Kraftfahrzeugs mit einem neunten Ausführungsbeispiel einer erfindungsgemäßen Vorrichtung und Fahrzeuginsassen zeigt;
- Fig. 8: eine Teil-Seitenschnittansicht eines Kraftfahrzeugs mit einem zehnten Ausführungsbeispiel einer erfindungsgemäßen Vorrichtung und Fahrzeuginsassen zeigt;
- Fig. 9: eine Darstellung eines Kraftfahrzeugs mit einem elften Ausführungsbeispiel der erfindungsgemäßen Vorrichtung zeigt;
- Fig. 10: eine Darstellung eines Kraftfahrzeugs mit einem zwölften Ausführungsbeispiel der erfindungsgemäßen Vorrichtung zeigt;
- Fig. 11a-d: jeweils eine Draufsicht eines Fahrzeuginsassensitzes eines Kraftfahrzeugs mit einem dreizehnten Ausführungsbeispiel der erfindungsgemäßen Vorrichtung zeigt;
- Fig. 12a-c: jeweils eine Darstellung eines Fahrzeuginsassensitzes eines Kraftfahrzeugs mit einem vierzehnten Ausführungsbeispiel der erfindungsgemäßen Vorrichtung zeigt; und
- Fig. 13: ein Blockdiagram eines erfindungsgemäßen Verfahrens zeigt.

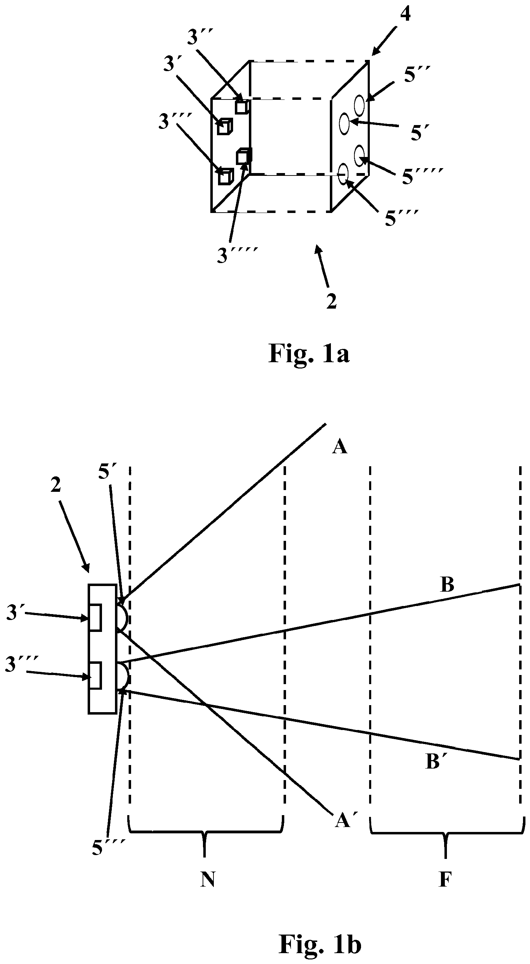

Eine für den Einsatz in einer erfindungsgemäßen Objekterkennungsvorrichtung geeignete Leuchteinrichtung 2 ist in Fig. 1a und 1b gezeigt, und zwar mit einer Matrix aus Leuchtdioden (LED) 3' bis 3"" und somit mit einer Matrixoptik, wie zum Beispiel bei einem Linsenarray. Dabei umfasst die Leuchteinrichtung 2 die in der Explosionsansicht der Fig. 1a gezeigten Leuchtquellen 3' bis 3"" mit den jeweils dazugehörigen und den Leuchtquellen 3' bis 3"" nachgeschalteten optischen Elementen 5' bis 5"" eines Optiksystems 4. So kann zum Beispiel durch die Aktivierung der Leuchtquelle 3' ein Nahfeld beleuchtet werden, und durch die Leuchtquelle 3‴ ein Fernfeld. Wie in der Seitenansicht in Fig. 1b angedeutet, weiten sich die Lichtstrahlen mit zunehmendem Abstand von der Leuchteinrichtung 2 immer weiter auf. Der von Leuchtquelle 3' beleuchtete Bereich ist hier beispielshaft auf den Bereich zwischen zwei Beleuchtungsgrenzen A und A' begrenzt, während der von Leuchtquelle 3‴ beleuchtete Bereich beispielshaft auf den Bereich zwischen Beleuchtungsgrenzen B und B' begrenzt ist. Dadurch, dass sich die zur Verfügung gestellte Lichtintensität auf ein größeres räumliches Feld verteilt, nimmt die Tiefenausleuchtung auf Kosten der Beleuchtungsfeldgröße ab. So kann zwar mit der Leuchtquelle 3' ein großes räumliches Feld senkrecht zur Lichtausbreitungsrichtung im Nahfeld N beleuchtet werden, die Lichtintensität reicht jedoch nicht mehr zur Ausleuchtung des Tiefenbereichs im Fernfeld F, um eine Objekterkennung durchführen zu können. Im Gegenzug ist zwar mit der Leuchtquelle 3‴ das Ausleuchtung des Tiefenbereichs im Fernfeld F möglich, jedoch ist der beleuchtete Bereich im Nahfeld N kleiner als bei Leuchtquelle 3', so dass ein nahes Objekt vielleicht nicht vollständig erfasst werden kann. Die Leuchtquellen 3" und 3"" können bei mittleren Distanzen eingesetzt werden, um eine erhöhte Ausleuchtung zu erreichen. Alternativ kann zumindest eine der Leuchtquellen 3", 3"" auch dazu verwendet werden, den Bereich oder einen Teilbereich außerhalb des Beleuchtungsbereichs der Lichtquelle 3‴ in Fernfeld F zu beleuchten. Durch die Verwendung mehrerer Leuchtquellen kann man somit eine jeweils benötigte räumliche Ausleuchtung additiv aus mehreren Leuchtquellen zusammensetzen.

Es ist selbstverständlich, dass eine Lichtausbreitung stets im dreidimensionalen Raum stattfindet, und nicht, wie hier beispielhaft gezeigt, in einer zweidimensionalen Ebene.

Auch wenn die Anordnung der Leuchtquellen 3' bis 3"" in den Figuren 1a und 1b in einer planen Ebene und einem regelmäßigen Muster dargestellt ist, kann auch eine gekrümmte oder anderweitig geformte Fläche zur Aufnahme der Leuchtquellen 3' bis 3"" vorgesehen sein. Dadurch kann die Richtung der Lichtausstrahlung und der Abstand der jeweiligen Leuchtquelle 3' bis 3"" zu dem jeweiligen optischen Element 5' bis 5"" voreingestellt werden. Auch die Anzahl der Leuchtquellen kann erhöht oder erniedrigt werden, je nachdem, wie der auszuleuchtende Bereich und der vorhandene Bauraum beschaffen sind.

Die optischen Elemente 5' bis 5"" des Optiksystems 4 können auch auf einer gekrümmten oder anderweitig geformten Fläche angeordnet sein, um den zu beleuchtenden Bereich optimal ausleuchten zu können.

Vorteilshafterweise kann eine Grundplatte zur Aufnahme der Leuchtquellen und/oder der optischen Elemente in einem Spritzgussverfahren hergestellt werden, insbesondere in einem Mehrkomponenten-Spritzgussverfahren, zumindest in einem 2K-Spritzgussverfahren.

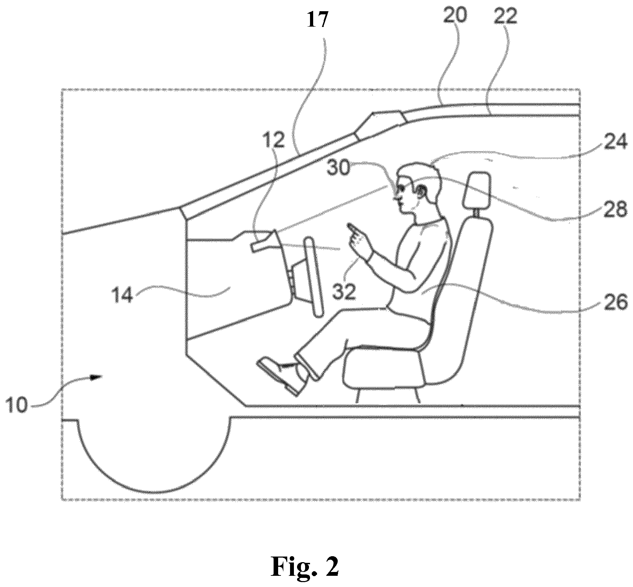

Ein in Fig. 2 gezeigtes und im Ganzen mit 10 bezeichnetes, erfindungsgemäßes Kraftfahrzeug umfasst ein Kamerasystem 12, das zum Beispiel in einem Armaturenbrett 14 angeordnet ist.

Befindet sich ein Fahrzeuginsasse 26 in einer normalen Sitzposition, wie zum Beispiel in Fig. 2 durch den Fahrers des Kraftfahrzeugs 10 dargestellt, dann kann mit dem Kamerasystem 12 eine Objekterkennung durchgeführt werden. So kann sowohl die Position und Bewegung einer Hand 32 des Fahrzeuginsassen 26 als auch die Position und Bewegung eines Kopfes 24 eines Fahrzeuginsassen 26 beobachtet werden. Das Kamerasystem 12 erfasst dabei beispielsweise sowohl die Augen 28 des Fahrzeuginsassen 26 als auch seinen gesamten Kopf 24. Die Überwachung der Position der Augen 28 kann durch Objekterkennung der Augen 28 als Ganzes erfolgen. Es kann jedoch auch eine feinere Analyse durchgeführt werden, bei der die Position von Pupillen oder Iris der Augen 28 beobachtet wird. Zur Bestimmung der Position und Orientierung des Kopfes 24 kann das Kamerasystem 12 besonders leicht zu erkennende Teile des Kopfes, wie beispielsweise die Nase 30 des Fahrzeuginsassen 26, beobachten.

Die Kombination aus der Erfassung von Kopfposition, Augenposition, Mimik und Gesten des Fahrzeuginsassen 26 ermöglicht eine besonders präzise berührungslose Steuerung des Kraftfahrzeugs 10 und dessen Funktionen.

Insbesondere bei großen Fahrzeuginsassen, jedoch auch bei nach hinten geneigten Sitzpositionen, kann es jedoch vorkommen, dass der Abstand zwischen Fahrzeuginsasse und Kamerasystem 12 so groß wird, dass eine zuverlässige Gesten- und/oder Kopferkennung nicht mehr gewährleistet ist. Insbesondere bei TOF-Kameras, bei denen die Leuchteinrichtung oftmals im Gehäuse mit einer Kamera oder in der unmittelbaren Nähe derselben untergebracht ist, liegt dies häufig an der fehlenden Lichtleistung der Leuchteinrichtung.

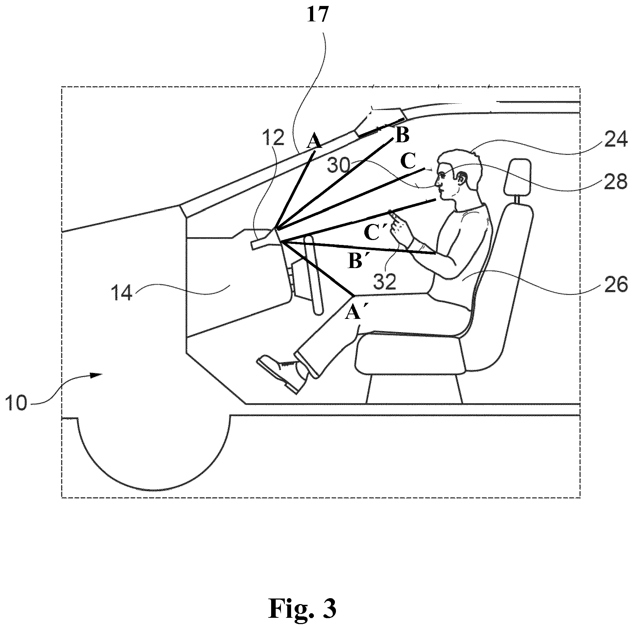

In Fig. 3 ist ein Kamerasystem 12 mit einer Leuchteinrichtung gezeigt, die analog zu der in Fig. 1b gezeigten Leuchteinrichtung verschiedene Bereiche ausleuchten kann. Beispielhaft werden hier drei verschiedene Bereiche gezeigt, die jeweils durch die Beleuchtungsgrenzen A und A', B und B' sowie C und C' begrenzt werden. Dabei können entweder wie bei dem Beispiel gemäß Fig. 1b verschiedene Leuchtquellen mit einem fixen Optiksystem benutzt werden, aber eine einzige Leuchtquelle mit einer adaptiven Optik und/oder verschiebbaren optischen Elementen, sowie auch eine Kombination beider Systeme sind möglich.

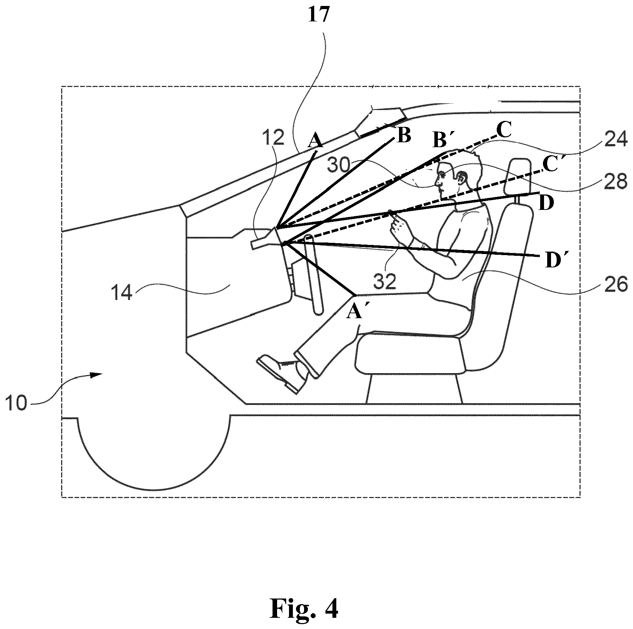

In Fig. 4 ist ein Kamerasystem 12 mit einer Leuchteinrichtung gezeigt, die wieder analog zu der in Fig. 1b gezeigten Leuchteinrichtung verschiedene Bereiche ausleuchten kann, wobei hier die Ausleuchtung des Tiefenbereichs im Fernfeld durch verschiedene Leuchtquellen additiv zusammengesetzt wird und/oder durch bewegliche Leuchtquellen und/oder optische Elemente realisiert wird. Beispielhaft werden hier vier verschiedene Bereiche gezeigt, die jeweils durch die Beleuchtungsgrenzen A und A', B und B', C und C' sowie D und D' begrenzt werden

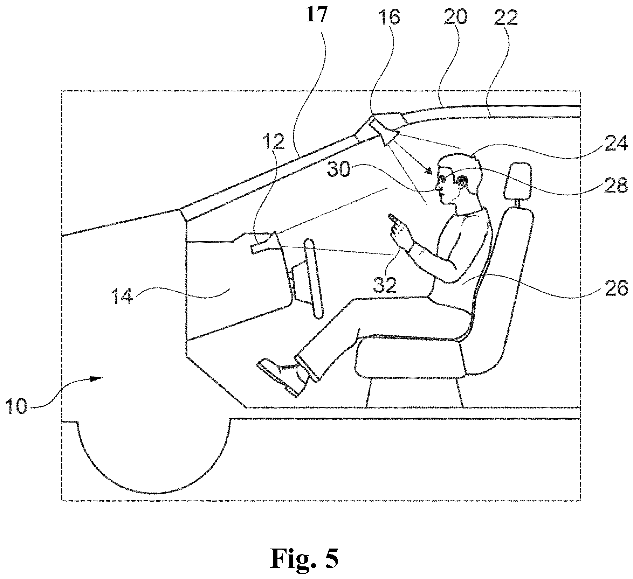

Wie in Fig. 5 dargestellt, kann durch eine, zum Beispiel am Übergang zwischen einer Windschutzscheibe 17 und dem Dach 20 des Kraftfahrzeugs 10 eingebaute, Leuchteinrichtung 16 bei Bedarf Licht in den Bereich eingestrahlt werden, der durch die Leuchteinrichtung des Kamerasystems 12 nicht mehr ausreichend beleuchtet wird. Dabei werden Kamerasystem 12 und Leuchteinrichtung 16 vorteilhafterweise von einer gemeinsamen Steuer- oder Regeleinrichtung gesteuert, um die Aktivierung der Leuchteinrichtungen und die Signal- und/oder Datenaufnahme abzustimmen. Durch das Licht der Leuchteinrichtung 16 wird die Objekterkennung in einem größeren räumlichen Umfeld möglich. Die Leuchteinrichtung 16 kann dabei alternativer Weise auch in einen Innenrückspiegel (nicht gezeigt) des Kraftfahrzeugs 10 integriert werden.

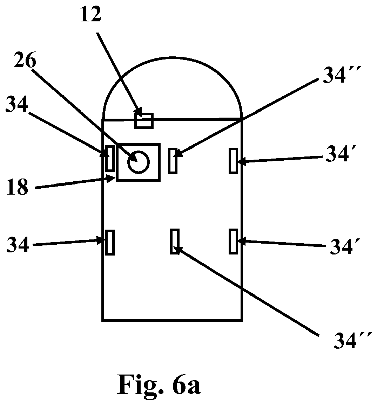

Eine andere Ausgestaltung der Leuchteinrichtung 16 ist in den Fig. 6a bis 6d dargestellt. Dabei beleuchtet eine Leuchteinrichtung 16 den Fahrzeuginsassen 26 im Fahrzeuginsassensitz 18 zumindest teilweise von der Seite. Es kann zum Beispiel vorgesehen sein, dass die Leuchteinrichtung 16, wie in Fig. 6a gezeigt, in einem Haltegriff 34 zum Beispiel über der Fahrertür angebracht ist. Eine derartige Leuchteinrichtung kann auch in den anderen Haltegriffen 34' auf der Beifahrerseite vorgesehen sein. Außerdem kann es vorgesehen sein, zusätzliche Haltegriffe 34" in einem Fahrzeuginnenraum zu installieren, um Fahrzeuginsassen in einem zumindest teilweise autonomen Kraftfahrzeug die Bewegung und/oder Sicherung zu erleichtern, die dann natürlich auch mit entsprechenden Leuchteinrichtungen 16 versehen werden können.

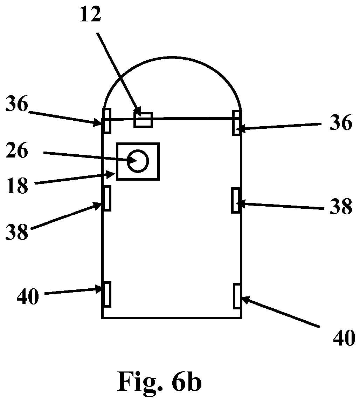

In Fig. 6b wird gezeigt, dass die Leuchteinrichtung 16 auch in einem Teil der A-Säule 36, der B-Säule 38 und/oder der C-Säule 40 des Kraftfahrzeugs 10 integrieren werden kann.

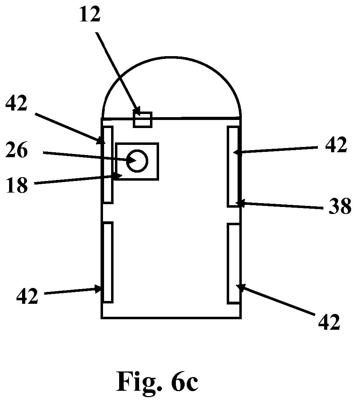

In Fig. 6c wird gezeigt, dass die Leuchteinrichtung 16 ferner im Bereich der Tür, der Türrahmen, der Fenster, der Fensterrahmen und den entsprechenden Abdeckungen, insbesondere der Verkleidung, hier kollektiv mit Türkomponenten 42 bezeichnet, integriert werden kann.

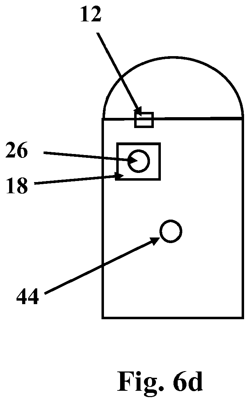

In Fig. 6d wird schließlich eine Leuchteinrichtung 16 gezeigt, die im Bereich der Fahrzeugmitte an der Decke, also dem Dach 20 oder dem Dachhimmel 22, angeordnet ist. Durch diese Positionierung ist es möglich, den zentralen Bereich des Kraftfahrzeuginnenraums besonders gut auszuleuchten. Vorteilhafterweise ist die Leuchteinrichtung 16 innerhalb eines kuppelförmigen Gehäuses 44 untergebracht, von wo aus die Leuchteinrichtung 16 bis zu 360 ° in einer vertikalen und bis zu 180 ° in einer horizontalen Ebene ausleuchten kann. Dies kann über mehrere fest installierte Leuchteinrichtungen passieren, oder die installierte Leuchteinrichtung kann eine Bewegung ausführen, um die Richtung der Lichtausbreitung zu verändern.

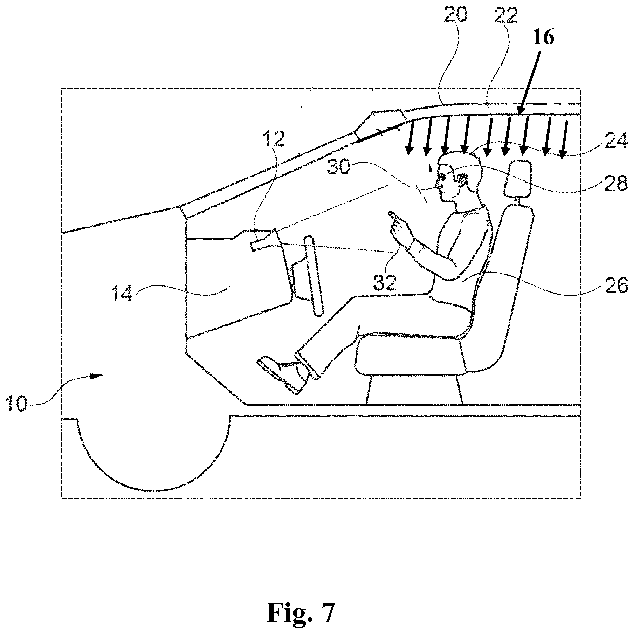

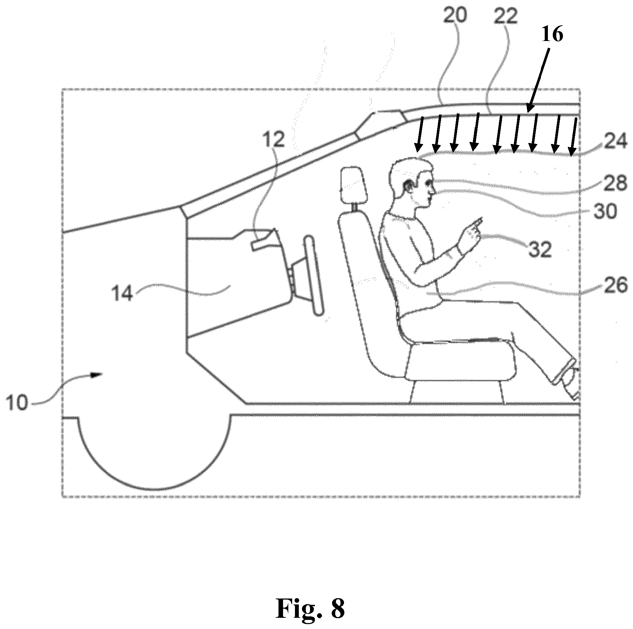

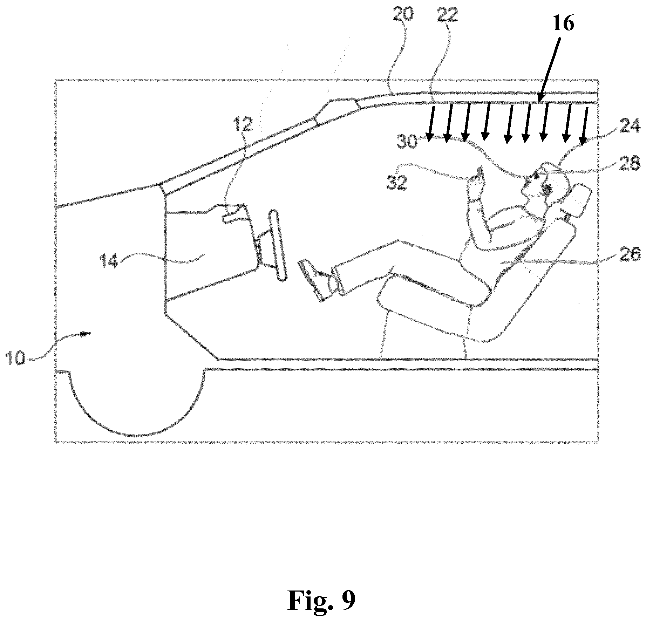

In den Fig. 7 bis 10 ist die Leuchteinrichtung 16 im Dachhimmel 22 integriert. Einerseits kann dies durch Leuchteinrichtungen geschehen, die bereichsweise über die Fläche des Dachhimmels 22 verteilt angeordnet sind, andererseits kann der gesamte Dachhimmel 22 selbst als Leuchteinrichtung ausgebildet sein. Durch die Integration der Leuchteinrichtung 16 in den Dachhimmel 22 können besonders vorteilhafterweise auch die in den Fig. 8 bis 10 dargestellten Sitz- bzw. Liegepositionen, die von Fahrzeuginsassen 26 und im Zusammenhang mit autonomen und/oder nicht selbst gesteuerten Fahrzeugen eingenommen werden können, beleuchtet werden. Insbesondere können aber auch nicht gezeigte Sitzpositionen und/oder Liegepositionen eingenommen werden. So können sich die Fahrzeuginsassen auch quer zur Fahrtrichtung des Kraftfahrzeugs ausrichten und/oder auf der Seite oder dem Bauch in dem Fahrzeuginsassensitz liegen. Bei der Bauchlage kann der Fahrzeuginsassensitz, insbesondere das Kopfteil des Fahrzeuginsassensitzes, über einen Bereich, insbesondere eine Aussparung oder ein Loch, verfügen, um den Kopf des Fahrzeuginsassen aufzunehmen, ohne dessen Gesicht zu verdecken. So wird für den Fahrzeuginsassen auch in einer solchen Position eine Möglichkeit geschaffen, den Kopf abzulegen, ohne dass dessen Atmung und/oder Ausblick durch den Fahrzeuginsassensitz behindert werden. In der Aussparung bzw. dem Loch können auch Leuchteinrichtungen, Kamerasysteme, Geräte, wie zum Beispiel Lautsprecher und/oder Mikrofone, und/oder Sensoren angebracht und/oder integriert werden.

Dabei kann es auch vorgesehen sein, dass der Dachhimmel 22 über eine für den Spektralbereich der Leuchteinrichtung 16 bereichsweise zumindest teil-transparente Abdeckung verfügt, so dass die Leuchteinrichtung 16 selbst nicht zu sehen ist, während das Licht der Leuchteinrichtung 16 das räumliche Umfeld trotzdem beleuchten kann. Vorteilhafterweise ist die Abdeckung für den Spektralbereich der Leuchteinrichtung im Wesentlichen vollständig transparent, während sie im sichtbaren Spektralbereich im Wesentlichen nicht transparent ist.

Durch die Verwendung mehrerer der obigen Leuchteinrichtungen an verschiedenen Positionen kann eine besonders gute Ausleuchtung des Fahrzeuginnenraumes erfolgen.

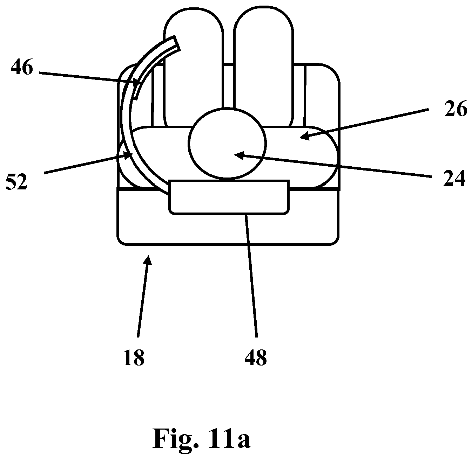

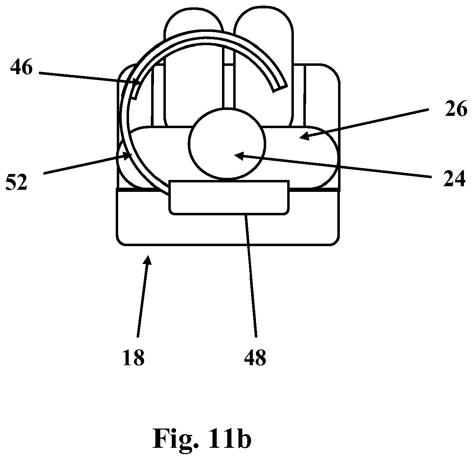

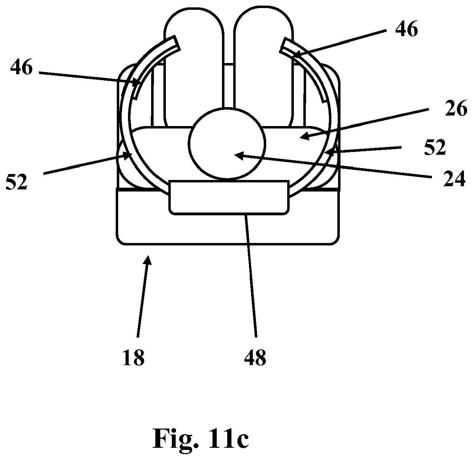

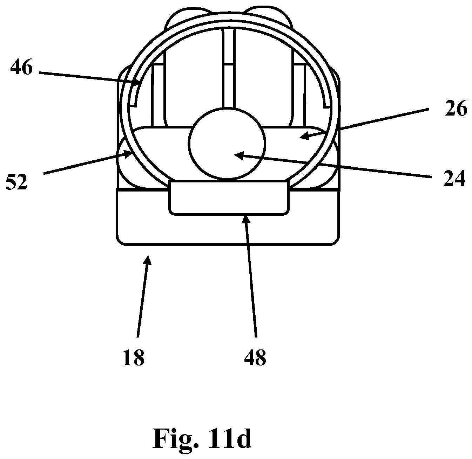

Erfindungsgemäß nutzbare Leuchteinrichtungen integriert in oder in Form von Anzeigeeinrichtungen 46 sind in den Fig. 11 bis 12 dargestellt. In den Fig. 11a bis 11d sind beispielshaft vier verschiedene Varianten von Anzeigeeinrichtungen 46 dargestellt, die in der Nähe von oder vor den Kopf 24 eines Fahrzeuginsassen 26 positioniert werden können. Dabei ist die Anzeigeeinrichtung 46 vorteilhafterweise in oder an der Kopfteil 48 des Fahrzeuginsassensitzes 18 angebracht und lässt sich über einen Positionierungsmechanismus 52 manuell oder automatisch in eine Position bringen, um dem Fahrzeuginsassen 26 Informationen bereitstellen zu können und/oder die Objekterkennung durch die Leuchteinrichtung und/oder durch das Kamerasystem unterstützen zu können. Eine Rotation und/oder Drehung der Anzeigeeinrichtung 46 bzw. des Positionierungsmechanismus 52 zur Anpassung an den Blickwinkel und das Blickfeld des Fahrzeuginsassen 26 ist auch möglich.

Zusätzlich oder alternativ kann es auch vorgesehen sein, dass eine Leuchteinrichtung ohne Anzeigeeinrichtung durch einen Positionierungsmechanismus 52 derart positioniert wird, dass sie die Objekterkennung unterstützen kann. Die Leuchteinrichtung kann dazu auch auf einer der Anzeigeeinrichtung abgewandten Seite positioniert werden, um zum Beispiel Gesten von Fahrzeuginsassen zu beleuchten.

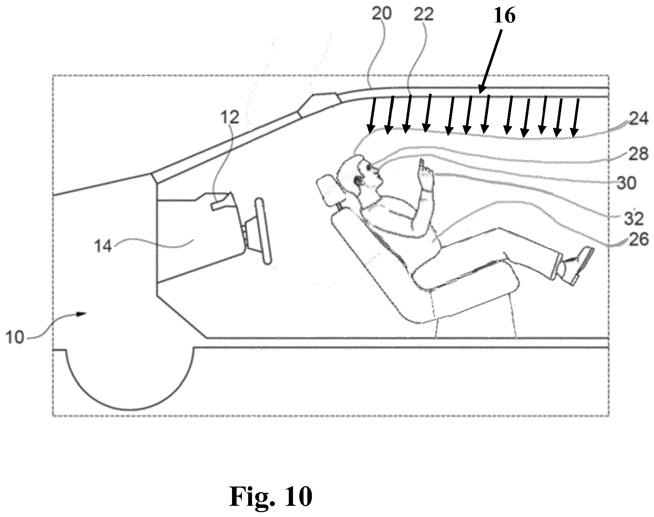

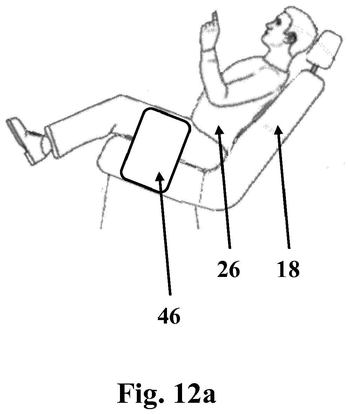

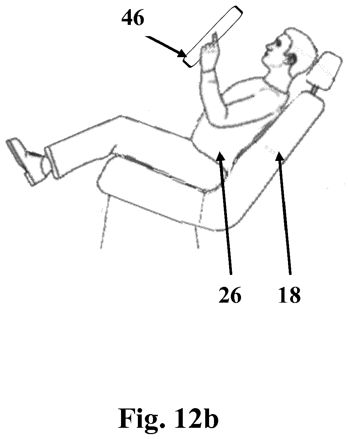

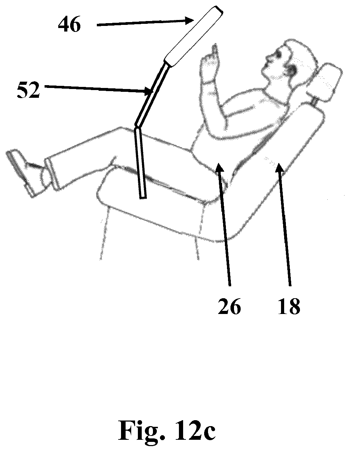

In Figur 12a ist eine Anzeigeeinrichtung 46 am Fahrzeuginsassensitz 18 positioniert, zum Beispiel neben oder an einer Armlehne 50. Der Fahrzeuginsasse 26 kann dabei die Anzeigeeinrichtung 46 manuell aus einer Halterung holen und in den Händen halten, wie in Fig. 10b dargestellt. Alternativ oder zusätzlich kann die Anzeigeeinrichtung 46, wie in Fig. 10c dargestellt, auch über einen Positionierungsmechanismus 52 im Blickfeld des Fahrzeuginsassen 26 so positioniert werden, dass der Fahrzeuginsasse 26 keine Hände für das Halten der Anzeigeeinrichtung 46 benötigt. Die Positionierung der Anzeigeeinrichtung 46 kann manuell und/oder motorbetrieben stattfinden. Die Anzeigeeinrichtung 46 kann auch in einem Teil des Fahrzeuginsassensitz 18 ausgebildet werden oder an einem solchen Teil eines Fahrzeuginsassensitz 18 angebracht sein, zum Beispiel einer Armlehne 50, an einer Kopfteil 48 , einem Fußteil und/oder an einem Rückhaltesystem, wie zum Beispiel als Teil eines Sicherheitsgurtsystems (nicht gezeigt). Das Rückhaltesystem für den Fahrzeuginsassen ist dementsprechend auch dazu ausgelegt, den Fahrzeuginsassen in allen Sitz- bzw. Liegepositionen sichern zu können. Dabei kann es auch vorgesehen sein, dass eine Leuchteinrichtung ohne Anzeigeeinrichtung durch einen Positionierungsmechanismus 52 derart positioniert wird, dass sie die Objekterkennung unterstützen kann.

Ein Positionierungsmechanismus 52 kann dabei zumindest ein Gelenk umfassen, um eine Drehung um einen Drehpunkt ermöglichen und/oder auszuführen. Alternativ oder zusätzlich kann ein Positionierungsmechanismus 52 auch eine lineare Bewegung ermöglichen und/oder ausführen, zum Beispiel in Form einer Schiene oder eines ausfahrbaren Stabs. Insbesondere kann ein Positionierungsmechanismus 52 eine Kombination von verschiedenen Bewegungen und/oder Bewegungsformen ermöglichen und/oder ausführen. Der Positionierungsmechanismus 52 verfügt dabei über zumindest eine erste Endposition und eine zweite Endposition, und ist über zumindest eine Bewegung zwischen der ersten und der zweiten Endposition überführbar. Eine erste Endposition kann beispielsweise ein zusammengefalteter Zustand sein, in dem zum Beispiel das Gerät, die Leuchtquelle, das Kamerasystem, die Anzeigeeinrichtung und/oder die Einrichtung in einem Stauraum oder einer Anfangsposition, zum Beispiel am Fahrzeuginsassensitz, der Mittelkonsole oder dem Dachhimmel, positioniert ist. Bei Bedarf kann dann durch das Ausführen einer Bewegung mit dem Positionierungsmechanismus 52 das Gerät, die Leuchtquelle, das Kamerasystem, die Anzeigeeinrichtung und/oder die Einrichtung in eine zweite Endposition bewegt werden. Dies kann dann zum Beispiel dazu führen, dass das Gerät, die Leuchtquelle, das Kamerasystem, die Anzeigeeinrichtung und/oder die Einrichtung im Blickfeld eines Fahrzeuginsassen positioniert wird und dort, wenn keine weitere Bewegung ausgeführt wird oder erforderlich ist, verharrt. Insbesondere kann der Positioniermechanismus 52 in Wirkverbindung mit dem Fahrzeuginsassensitz, der Anzeigeeinrichtung, dem Armaturenbrett, der Mittelkonsole, der Fahrzeugöffnung, der Warneinrichtung, der Wärmeeinrichtung, der Klimaeinrichtung, dem Navigationssystem, der Audioanlage, der Telefonanlage, der Videoanlage und/oder der Hologrammanlage stehen oder ist damit in Wirkverbindung bringbar.

Besonders vorteilhaft kann auch die Ausgestaltung der Anzeigeeinrichtung und/oder Leuchteinrichtung als Teil eines Fußteils des Fahrzeuginsassensitzes stattfinden. Wenn der Fahrzeuginsasse eine Liegeposition einnimmt, kann durch die in das Fußteil des Fahrzeuginsassensitzes ausgebildete oder daran angebrachte Anzeigeeinrichtung und/oder Leuchteinrichtung die Objekterkennung verbessert und/oder durchgeführt werden.

Ferner kann das Kraftfahrzeug 10 eine Mehrzahl von in den Figuren nicht dargestellten Anzeigeeinrichtungen umfassen, die beispielsweise im Armaturenbrett 14 integriert sein können, als Head-Up-Display auf der Windschutzscheibe 18 ausgeführt sein können oder in einem Dachhimmel 22 oder anderen Innenverkleidungsteilen des Kraftfahrzeugs 10, insbesondere im Bereich der Fahrzeugtüren, verbaut sein können. Weiterhin können die Fenster des Kraftfahrzeugs 10 auch als Anzeigeeinrichtung und/oder Leuchteinrichtung ausgebildet sein. In diesem Zusammenhang wird vorteilhafterweise eine Anzeigeeinrichtung und/oder Leuchteinrichtung verwendet, die im ausgeschalteten Zustand zumindest bereichsweise im Wesentlichen transparent ist, während sie im angeschalteten Zustand Informationen und/oder Licht bereitstellt. Zum Beispiel können organische Leuchtdioden (OLED) dafür verwendet werden. Allerdings können auch Anzeigeeinrichtungen verwendet werden, die die Fenster des Kraftfahrzeugs komplett ersetzen und auf denen beispielsweise das durch Kamerasysteme aufgenommene Bild der Umgebung gezeigt werden kann. Weitere Anzeigeeinrichtungen umfassen eine Projektionsfläche, ein Head-Up-Display, ein flexibles OLED-Display, ein Flüssigkristalldisplay, lichttechnisches Gewebe und/oder lichttechnische Folien, insbesondere in Form eines Dachhimmelmonitors, Innenverkleidungsteilmonitors, eines linken Türmonitors, eines linken Hauptmonitors, eines rechten Hauptmonitors und/oder eines rechten Türmonitors, die in einem Armaturenbrett, auf einer Windschutzscheibe, in einem Dachhimmel und/oder in der Mittelkonsole angeordnet werden können.

Anstelle oder zusätzlich zu den in allen Ausführungsformen genannten Leuchteinrichtungen kann auch an den jeweiligen Positionen eine Kamera und/oder ein Kamerasystem verwendet werden, um die Objekterkennung durchzuführen und/oder zu verbessern. Dies ist insbesondere dann vorteilhaft, wenn durch die Veränderung von Sitzposition und Sitzausrichtung sowie durch Verdeckung das Objekt nicht mehr im ursprünglichen Erfassungsbereich des Kamerasystems ist.

Weiterhin kann es vorgesehen sein, dass die Steuer- oder Regeleinrichtung zur Objekterkennung auf Daten, Sensoren, Kameras und/oder Leuchteinrichtungen von anderen Geräte, wie zum Beispiel externen Geräten und/oder andern Fahrzeugeinrichtungen zugreift. So kann die Steuer- oder Regeleinrichtung zum Beispiel auf ein mobiles Endgerät, das einem Fahrzeuginsassen gehört und mit ihm herumgetragen wird, zugreifen, um zusätzliche Daten, wie zum Beispiel Steuerbefehle, Profildaten oder Sensordaten, zu bekommen und/oder Kameras und/oder Leuchteinrichtungen des mobilen Endgeräts zu nutzen. Ebenso ist es möglich, Daten von Fahrzeugeinrichtungen zu erhalten oder Fahrzeugeinrichtungen zu steuern, um die Objekterkennung zu unterstützen und/oder durchführen zu können. Beispiele solcher Fahrzeugeinrichtungen können Sensoren sein, die zum Beispiel im Fahrzeuginsassensitz integriert sind und die Ausrichtung, Position, Beschleunigung, Temperatur, den Zustand des Fahrzeuginsassensitzes und/oder Daten vom Fahrzeuginsassen, wie zum Beispiel Gewicht, Atmung, Herzschlag, Temperatur, Beschleunigung und/oder Bewegung messen. Andere vorteilhafte Fahrzeugeinrichtungen können Speichereinrichtungen, Datenübertragungs- und/oder Informationsschnittstellen sein, die ein Profil mit den Daten, wie zum Beispiel körperliche Daten, insbesondere den Gesichtsmerkmalen und/oder bevorzugten Einstellungen des Fahrzeuginsassen, zur Verfügung stellen und für die Objekterkennung genutzt werden können.

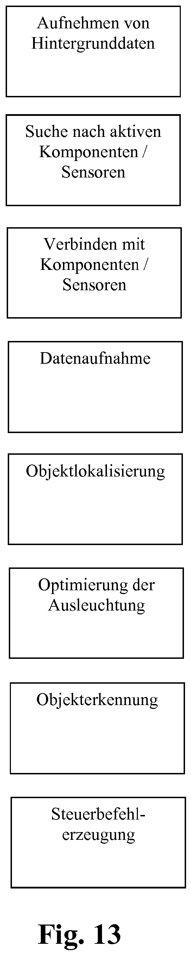

Ein Verfahren zum Betreiben einer erfindungsgemäßen Objekterkennungsvorrichtung wird beispielshaft in dem Blockdiagram in Fig. 13 gezeigt. Das Verfahren umfasst dabei zumindest die Schritte der Signal- und/oder Datenaufnahme, der Objektlokalisierung und der Objekterkennung. Basierend auf der Objektlokalisierung kann dann bei Bedarf die Ausleuchtung des Kraftfahrzeuginnenraums optimiert werden, um die Objekterkennung durchzuführen. Die von der Objekterkennung erkannten Befehle können dann ausgeführt werden. Aus den zur Verfügung gestellten Daten werden die Objektlokalisierung und die Objekterkennung durch entsprechende Algorithmen realisiert. Die Optimierung und/oder Variation der Ausleuchtung kann auch zusätzlich oder alternativ vor der Objektlokalisierung stattfinden. Dies ist insbesondere dann wichtig, wenn ohne eine solche Ausleuchtungsveränderung nicht genug Daten für eine erste Objektlokalisierung gewonnen werden können.

Bevorzugt werden vor oder während der Aktivierung des Kraftfahrzeugs Hintergrunddaten aufgenommen, um die Objektlokalisierung und Objekterkennung leichter durchführen zu können. Dies kann zum Beispiel passieren, bevor oder während das Kraftfahrzeug entriegelt wird und ein Fahrzeuginsasse in das Kraftfahrzeug einsteigt, insbesondere dann, wenn er einen Entriegelungsbefehl, zum Beispiel über eine externe Steuerung wie eine Fernbedienung, ein Smartphone und/oder ein anderes Gerät, für das Kraftfahrzeug gibt. Durch den Vergleich des vorherigen Zustands mit dem Ist-Zustand kann die Objekterkennung die Unterschiede, die in der Folge durch den Fahrzeuginsassen herbeigeführt werden, besser erkennen.

Alternativ oder zusätzlich kann die Objekterkennungsvorrichtung nach anderen Geräten, bevorzugt aktiven Geräten, Fahrzeugeinrichtungen und Sensoren suchen, die die Objekterkennung durchführen und/oder unterstützen können. Dazu kann regelmäßig, aber zumindest während und nach dem Aktivieren des Kraftfahrzeugs ein Steuersignal versendet werden, das nach veränderten Sensordaten, Fahrzeugeinrichtungen und/oder zusätzlichen Geräten sucht. Dieses Steuersignal kann sowohl Kabelgebunden als auch ohne Kabel versendet werden. Die gefundenen Geräte, Fahrzeugeinrichtungen und/oder Sensoren werden dann von der Steuer- oder Regeleinrichtung der Objekterkennungsvorrichtung in das Verfahren zur Objekterkennung mit aufgenommen, um Daten zu erhalten und/oder Daten zu senden. Diese Schritte können auch durchgeführt werden, bevor die Aufnahme der Hintergrunddaten ausgeführt oder abgeschlossen ist. Dadurch können möglichst alle Geräte, Fahrzeugeinrichtungen und/oder Sensoren Hintergrunddaten liefern, die zu einer Verbesserung der Objekterkennung führen.

### Bezugszeichenliste

- A, A', B, B', C, C', D, D': Beleuchtungsgrenzen
- N: Nahfeld
- F: Fernfeld
- 2: Leuchteinrichtung
- 3, 3', 3", 3‴, 3"": Leuchtquelle
- 4: Optiksystem
- 5, 5', 5", 5‴, 5"": Optisches Element
- 10: Kraftfahrzeug
- 12: Kamerasystem
- 14: Armaturenbrett
- 16: Leuchteinrichtung
- 17: Windschutzscheibe
- 18: Fahrzeuginsassensitz
- 20: Dach
- 22: Dachhimmel
- 24: Kopf
- 26: Fahrzeuginsasse
- 28: Auge
- 30: Nase
- 32: Hand
- 34, 34', 34": Haltegriff
- 36: A-Säule
- 38: B-Säule
- 40: C-Säule
- 42: Türkomponenten
- 44: Gehäuse
- 46: Anzeigeeinrichtung
- 48: Kopfteil
- 50: Armlehne
- 52: Positionierungsmechanismus

## Patentansprüche

1. Objekterkennungsvorrichtung zur Erkennung zumindest eines, sich insbesondere bewegenden, Objekts (26), vorzugsweise bereitgestellt von einem Fahrzeuginsassen oder in Form zumindest eines Teils des Fahrzeuginsassen, im Innenraum eines Kraftfahrzeugs (10), umfassend:
ein Kamerasystem (12), das zumindest einen Sensor zur Umwandlung elektromagnetischer Strahlung in elektrische Signale und eine Leuchteinrichtung (2) mit zumindest einer Leuchtquelle (3) sowie einem Optiksystem (4) umfasst; und
eine Steuer- oder Regeleinrichtung, die dazu ausgelegt ist, die elektrischen Signale von dem Kamerasystem (12) und/oder Daten von zumindest einem Sensor, zumindest einem weiteren Gerät und/oder zumindest einer Einrichtung des Kraftfahrzeugs (10) zu empfangen,
Steuerbefehle zu generieren sowie an das Kamerasystem, das weitere Gerät und/oder die Einrichtung des Kraftfahrzeugs (10) zu senden; **dadurch gekennzeichnet, dass** die Leuchteinrichtung (2) durch zumindest ein optisches Element (5-5"") des Optiksystems (4) und/oder zumindest eine zusätzliche Leuchteinrichtung (16) und/oder ein zusätzliches Kamerasystem, vorzugsweise jeweils in der Nähe des Objektes positioniert, bestimmte Bereiche, insbesondere ein Nahfeld (N) und ein Fernfeld (F), im Kraftfahrzeug (10) so ausleuchten kann, dass durch das Kamerasystem (12) zu einer Vielzahl von Objektpunkten in den Bereichen zumindest eine in den elektrischen Signalen enthaltende Entfernungsinformation erfassbar ist, wobei die Ausleuchtung, die Objektlokalisierung und/oder -erkennung und/oder die Aktivierung zumindest einer der Leuchteinrichtungen (2, 16) und/oder Kamerasysteme (12) vom Zustand des Kraftfahrzeugs (10), bestimmt durch Geschwindigkeit, Beschleunigung, Fahrzeugsitzbelegung, Fahrzeugsitzposition, Fahrzeugsitzausrichtung und/oder Beleuchtung, insbesondere die Beleuchtung des Fahrzeuginnenraums, und/oder vom Zustand der Umgebung des Kraftfahrzeugs (10), bestimmt durch das Wetter, Tag, Nacht, Fahrbahn, Verkehrszeichen und/oder Verkehrssituation, bestimmt ist,
wobei
• die Objekterkennungsvorrichtung eine Rechner- oder Kontrolleinheit umfasst, die zur Auswertung der elektrischen Signale und/oder der Daten durch einen Objektlokalisierungsalgorithmus und/oder einen Objekterkennungsalgorithmus ausgelegt ist, und/oder
• die Steuer- oder Regeleinrichtung dazu ausgelegt ist, das Kamerasystem (12), das zusätzliche Kamerasystem, die Leuchteinrichtung (2) des Kamerasystems (12), die zusätzliche Leuchteinrichtung (16), die Leuchteinrichtung des zusätzlichen Kamerasystems, zumindest einen Sensor, die Einrichtung und/oder das Gerät zu steuern und/oder zu koordinieren.

2. Objekterkennungsvorrichtung nach Anspruch 1, **dadurch gekennzeichnet, dass** das Gerät in Form eines mobilen Geräts des Objekts (26) bereitgestellt ist.

3. Objekterkennungsvorrichtung nach Anspruch 1 oder 2, **dadurch gekennzeichnet, dass** die Leuchteinrichtung (2) des Kamerasystems (12), die zusätzliche Leuchteinrichtung (16) und/oder die Leuchteinrichtung des zusätzlichen Kamerasystems mehr als eine Leuchtquelle (3 - 3ʺʺ) umfasst bzw. umfassen, wobei vorzugsweise jede Leuchtquelle, insbesondere unabhängig voneinander, in Abhängigkeit von dem Zustand des Objekts (26), des Kraftfahrzeugs (10) und/oder der Umgebung des Kraftfahrzeugs (10) und/oder der Entfernung des Objekts (26) zum Kamerasystem (12), insbesondere des Sensors des Kamerasystems, und/oder zum zusätzlichen Kamerasystem, insbesondere des Sensors des zusätzlichen Kamerasystems, aktivierbar ist.

4. Objekterkennungsvorrichtung nach einem der vorhergehenden Ansprüche, **dadurch gekennzeichnet, dass**
die Steuer- oder Regeleinrichtung die Ausleuchtung von verschiedenen Bereichen im Innenraum des Kraftfahrzeugs (10) basierend auf dem Zustand des Objekts (26), des Kraftfahrzeugs (10) und/oder der Umgebung des Kraftfahrzeugs und/oder der Entfernung des Objekts (26) zum Kamerasystem (12), insbesondere des Sensors des Kamerasystems (12), und/oder zum zusätzlichen Kamerasystem, insbesondere des Sensors des zusätzlichen Kamerasystems, verändert.

5. Objekterkennungsvorrichtung nach einem der vorhergehenden Ansprüche, **dadurch gekennzeichnet, dass**
die Ausleuchtung, die Objektlokalisierung und/oder -erkennung und/oder die Aktivierung zumindest einer der Leuchteinrichtungen (2, 16) und/oder Kamerasysteme (12) vom Zustand des Objekts (26), bestimmt durch Größe, Gewicht, Atmung, Herzschlag, Temperatur, Beschleunigung, Bewegung und/oder körperlichen Fitheit des Fahrzeuginsassen, bestimmt ist.

6. Objekterkennungsvorrichtung nach einem der vorhergehenden Ansprüche, **dadurch gekennzeichnet, dass**
die Leuchteinrichtung (2) des Kamerasystems (12), die Leuchteinrichtung des zusätzlichen Kamerasystems, die zusätzliche Leuchteinrichtung (16), das Kamerasystem (12) und/oder das zusätzliche Kamerasystem in einem Armaturenbrett (14), einer Mittelkonsole, insbesondere eine versenk- oder verfahrbaren Mittelkonsole, einer Windschutzscheibe (17), einem Dach (20), einem Dachhimmel (22), einem Haltegriff (34, 34', 34"), einer A-Säule (36), einer B-Säule (38), einer C-Säule (40), einer Türkomponente (42), oberhalb einer Tür, einem Gehäuse (44), insbesondere ein kuppelförmiges Gehäuse im Bereich der Fahrzeugmitte am Dach (20) oder Dachhimmel (22), einer Anzeigeeinrichtung (46), einem Fahrzeuginsassensitz (18), insbesondere einem Kopfteil (48), einem Fußteil und/oder einer Armlehne (50) des Fahrzeuginsassensitzes (18), einem Rückhaltesystem für den Fahrzeuginsassen, einem Positionierungsmechanismus (52), insbesondere einem motorbetriebenen Positionierungsmechanismus, einer Verkleidung und/oder dem Gerät, insbesondere in Form eines mobilen Geräts des Objekts (26), angebracht oder darin integriert ist.

7. Objekterkennungsvorrichtung nach Anspruch 6, **dadurch gekennzeichnet, dass** die in der Anzeigeeinrichtung (46) integrierte Leuchteinrichtung über einen Anzeigebereich der Anzeigeeinrichtung verteilte Leuchtquellen umfasst, wobei die Leuchtquellen der Anzeigeeinrichtung Gruppen von Emittern und/oder Regionen mit unterschiedlichen spektralen Emissionsbereichen umfassen, die dazu ausgelegt sind, Licht in zumindest einen Teil eines für die Objekterkennung genutzten Spektralbereichs bereitstellen zu können, und/oder zusätzlich spektrale Emitter für den Spektralbereich der Objekterkennung umfassen.

8. Objekterkennungsvorrichtung nach einem der vorhergehenden Ansprüche, **dadurch gekennzeichnet, dass**
das Optiksystem (4) Führungen und/oder rotierende Räder zum Austauschen und/oder Verschieben des optischen Elements (5 - 5"") und/oder Aktuatormittel zur Induktion von Bewegungen umfasst, und/oder das optisches Element (5 - 5"") des Optiksystems (4) Linsen, Filter, adaptive Optiken, aktive optische Elemente und/oder Spiegel umfasst.

9. Objekterkennungsvorrichtung nach einem der vorhergehenden Ansprüche, **dadurch gekennzeichnet, dass**
die Ausleuchtung bestimmbar ist über die spektrale Frequenz, Amplitude, Dauer, insbesondere bestimmt durch Pulsfrequenz und/oder Pulslänge, Polarisation und/oder Intensität der Beleuchtung, wobei vorzugsweise die spektrale Frequenz oberhalb und/oder unterhalb des sichtbaren Lichts liegt.

10. Verfahren zum Betreiben einer Objekterkennungsvorrichtung nach einem der vorhergehenden Ansprüche **gekennzeichnet durch**
eine Signal- und/oder Datenaufnahme, Objektlokalisierung, Anpassung der Ausleuchtung des Objekts, Objekterkennung und/oder Steuerbefehlerzeugung.

11. Verfahren nach Anspruch 10, bei welchem
vor der Signal- und/oder Datenaufnahme eine Aufnahme von Hintergrunddaten und/oder eine Verbindung mit dem Gerät, dem Sensor und/oder der Einrichtung durchgeführt wird.

12. Kraftfahrzeug (10), insbesondere selbstfahrendes Kraftfahrzeug (10), mit einer Objekterkennungsvorrichtung nach einem der Ansprüche 1 bis 9 und/oder zum Durchführen eines Verfahrens nach Anspruch 10 oder 11 ausgelegt.

13. Kraftfahrzeug (10) nach Anspruch 12, **dadurch gekennzeichnet, dass**
die Einrichtung zum autonomen Fahren ausgelegt ist, und/oder
die Steuer- oder Regeleinrichtung zum Einstellen der Position des Fahrzeuginsassen im Fahrzeuginnenraums, insbesondere über den Fahrzeuginsassensitz (18), der Anzeigeeinrichtung (46), des Armaturenbretts (14), der Mittelkonsole insbesondere einer versenk- oder verfahrbarer Mittelkonsole, einer Fahrzeugöffnung, einer Warneinrichtung, einer Wärmeeinrichtung, einer Klimaeinrichtung, eines Navigationssystems, einer Audioanlage, einer Telefonanlage, einer Videoanlage, einer Hologrammanlage und/oder des Positioniermechanismus (52) ausgelegt ist.

14. Kraftfahrzeug (10) nach Anspruch 12 oder 13, **dadurch gekennzeichnet, dass** der Positioniermechanismus (52) in Wirkverbindung mit dem Fahrzeuginsassensitz (18), der Anzeigeeinrichtung (46), dem Armaturenbrett (14), der Mittelkonsole, der Fahrzeugöffnung, der Warneinrichtung, der Wärmeeinrichtung, der Klimaeinrichtung, dem Navigationssystem, der Audioanlage, der Telefonanlage, der Videoanlage und/oder der Hologrammanlage steht oder bringbar ist.

## Claims

1. An object recognition device for detecting at least one, in particular moving, object (26), preferably provided by a vehicle occupant or in the form of at least part of the vehicle occupant, in the interior of a motor vehicle (10), comprising:
a camera system (12) comprising at least one sensor for converting electromagnetic radiation into electrical signals and a lighting apparatus (2) having at least one light source (3) and an optics system (4); and
a control or regulating apparatus which is adapted to receive the electrical signals from the camera system (12) and/or data from at least one sensor, at least one further device, and/or at least one apparatus of the motor vehicle (10), to generate control commands and to transmit them to the camera system, the further device, and/or the apparatus of the motor vehicle (10); **characterized in that**
the lighting apparatus (2) can illuminate specific regions, in particular a near field (N) and a far field (F), in the motor vehicle (10) by at least one optical element (5-5"") of the optics system (4) and/or at least one additional lighting apparatus (16) and/or an additional camera system, each preferably positioned in the vicinity of the object, such that at least one piece of distance information contained in the electrical signals can be detected by the camera system (12) for a plurality of object points in the regions, wherein the illumination, the object localization and/or the object recognition, and/or the activation of at least one of the lighting apparatuses (2, 16) and/or camera systems (12) is/are determined by the state of the motor vehicle (10), determined by speed, acceleration, vehicle seat occupancy, vehicle seat position, vehicle seat orientation, and/or lighting, in particular the lighting of the vehicle interior, and/or by the state of the environment of the motor vehicle (10), determined by weather, day, night, the roadway, traffic signs, and/or a traffic situation,
wherein
• the object recognition device comprises a computer or control unit adapted to evaluate the electrical signals and/or the data by an object localization algorithm and/or an object recognition algorithm, and/or
• the control or regulating apparatus is adapted to control and/or coordinate the camera system (12), the additional camera system, the lighting apparatus (2) of the camera system (12), the additional lighting apparatus (16), the lighting apparatus of the additional camera system, at least one sensor, the apparatus, and/or the device.

2. The object recognition device according to Claim 1, **characterized in that** the device is provided in the form of a mobile device of the object (26).

3. The object recognition device according to Claim 1 or 2, **characterized in that** the lighting apparatus (2) of the camera system (12), the additional lighting apparatus (16), and/or the lighting apparatus of the additional camera system comprise(s) more than one light source (3-3""), wherein each light source can preferably be activated, in particular independently from one another, depending on the state of the object (26), of the motor vehicle (10) and/or the environment of the motor vehicle (10), and/or of the distance of the object (26) from the camera system (12), in particular the sensor of the camera system, and/or from the additional camera system, in particular the sensor of the additional camera system.

4. The object recognition device according to any one of the preceding claims,
**characterized in that**
the control or regulating apparatus changes the illumination of different regions in the interior of the motor vehicle (10) based on the state of the object (26), of the motor vehicle (10) and/or the environment of the motor vehicle, and/or of the distance of the object (26) from the camera system (12), in particular the sensor of the camera system (12), and/or from the additional camera system, in particular the sensor of the additional camera system.

5. The object recognition device according to any one of the preceding claims,
**characterized in that**
the illumination, the object localization and/or the object recognition, and/or the activation of at least one of the lighting apparatuses (2, 16) and/or camera systems (12) is determined by the state of the object (26), determined by the height, weight, breathing, heartbeat, temperature, acceleration, movement, and/or physical fitness of the vehicle occupant.

6. The object recognition device according to any one of the preceding claims,
**characterized in that**
the lighting apparatus (2) of the camera system (12), the lighting apparatus of the additional camera system, the additional lighting apparatus (16), the camera system (12), and/or the additional camera system is/are attached or integrated in a dashboard (14), a center console, in particular a retractable or displaceable center console, a windshield (17), a roof (20), a headliner (22), a handle (34, 34', 34"), an A pillar (36), a B pillar (38), a C pillar (40), a door component (42), above a door, a housing (44), in particular a dome-shaped housing in the region of the vehicle center on the roof (20) or headliner (22), a display apparatus (46), a vehicle occupant seat (18), in particular a head part (48), a foot part, and/or an armrest (50) of the vehicle occupant seat (18), a restraint system for the vehicle occupant, a positioning mechanism (52), in particular a motor-driven positioning mechanism, a facing, and/or the device, in particular in a form of a mobile device of the object (26).

7. The object recognition device according to Claim 6, **characterized in that**
the lighting apparatus integrated in the display apparatus (46) comprises light sources distributed over a display region of the display apparatus, wherein the light sources of the display device comprise groups of emitters and/or regions having different spectral emission ranges, which are adapted to be able to provide light in at least part of a spectral range used for the object recognition, and/or additionally comprise spectral emitters for the spectral range of the object recognition.

8. The object recognition device according to any one of the preceding claims,
**characterized in that**
the optics system (4) comprises guides and/or rotating wheels for exchanging and/or displacing the optical element (5-5"") and/or actuator means for inducing movements, and/or the optical element (5-5"") of the optics system (4) comprises lenses, filters, adaptive optics, active optical elements, and/or mirrors.

9. The object recognition device according to any one of the preceding claims,
**characterized in that**
the illumination can be determined by the spectral frequency, amplitude, duration, in particular determined by pulse frequency and/or pulse length, polarization and/or intensity of the illumination, wherein the spectral frequency is preferably above and/or below the visible light.

10. A method for operating an object recognition device according to any one of the preceding claims, **characterized by**
signal and/or data acquisition, object localization, adaptation of the illumination of the object, object recognition, and/or control command generation.

11. The method according to Claim 10, in which
prior to the signal and/or data acquisition, background data is acquired and/or a connection is established to the device, the sensor, and/or the apparatus.

12. A motor vehicle (10), in particular a self-driving motor vehicle (10), comprising an object recognition device according to any one of Claims 1 to 9 and/or adapted to carry out a method according to Claim 10 or 11.

13. The motor vehicle (10) according to Claim 12, **characterized in that**
the apparatus is adapted for autonomous driving, and/or
the control or regulating device is adapted to adjust the position of the vehicle occupant in the vehicle interior, in particular by the vehicle occupant seat (18), the display apparatus (46), the dashboard (14), the center console, in particular a retractable or displaceable center console, a vehicle opening, a warning apparatus, a heating apparatus, an air-conditioning apparatus, a navigation system, an audio system, a telephone system, a video system, a hologram system, and/or the positioning mechanism (52).

14. The motor vehicle (10) according to Claim 12 or 13, **characterized in that** the positioning mechanism (52) is operatively connected to or can be brought into an operative connection with the vehicle occupant seat (18), the display apparatus (46), the dashboard (14), the center console, the vehicle opening, the warning apparatus, the heating apparatus, the air-conditioning apparatus, the navigation system, the audio system, the telephone system, the video system, and/or the hologram system.

## Revendications

1. Dispositif d'identification d'objets destiné à identifier au moins un objet (26), en particulier en mouvement, de préférence fourni par un occupant de véhicule ou sous la forme d'au moins une partie de l'occupant de véhicule, dans l'habitacle d'un véhicule automobile (10), comprenant :
un système de caméra (12) qui comprend au moins un capteur apte à transformer un rayonnement électromagnétique en signaux électriques et un équipement d'éclairage (2) doté d'au moins une source d'éclairage (3) ainsi que d'un système optique (4) ; et un équipement de commande ou de régulation qui est adapté pour recevoir les signaux électriques provenant du système de caméra (12) et/ou des données provenant d'au moins un capteur, au moins un autre appareil et/ou au moins un équipement du véhicule automobile (10), générer des instructions de commande ainsi que les envoyer au système de caméra, à l'autre appareil et/ou à l'équipement du véhicule automobile (10) ; **caractérisé en ce que**
l'équipement d'éclairage (2) peut éclairer des zones définies, en particulier un champ proche (N) et un champ lointain (F), dans le véhicule automobile (10) au moyen d'au moins un élément optique (5-5"") du système optique (4) et/ou d'au moins un équipement d'éclairage (16) supplémentaire et/ou d'un système de caméra supplémentaire, de préférence respectivement positionnés à proximité de l'objet, de telle manière qu'au moins une information de distance contenue dans les signaux électriques relative à une pluralité de points d'objet dans lesdites zones peut être acquise au moyen du système de caméra (12), l'éclairage, la localisation et/ou l'identification d'objets et/ou l'activation d'au moins un des équipements d'éclairage (2, 16) et/ou des systèmes de caméra (12) étant définis à partir de l'état du véhicule automobile (10), défini par la vitesse, l'accélération, l'occupation des sièges du véhicule, la position des sièges du véhicule, l'orientation des sièges du véhicule et/ou l'éclairage, en particulier l'éclairage de l'habitacle, et/ou à partir de l'état de l'environnement du véhicule automobile (10), défini par le temps, le jour, la nuit, la chaussée, la signalisation routière et/ou la situation du trafic,
dans lequel
• le dispositif d'identification d'objets comprend une unité de calcul ou de contrôle qui est adaptée pour évaluer les signaux électriques et/ou les données au moyen d'un algorithme de localisation d'objets et/ou d'un algorithme d'identification d'objets, et/ou
• l'équipement de commande ou de régulation est adapté pour commander et/ou coordonner le système de caméra (12), le système de caméra supplémentaire, l'équipement d'éclairage (2) du système de caméra (12), l'équipement d'éclairage supplémentaire (16), l'équipement d'éclairage du système de caméra supplémentaire, au moins un capteur, l'équipement et/ou l'appareil.

2. Dispositif d'identification d'objets selon la revendication 1, **caractérisé en ce que** l'appareil est fourni sous la forme d'un appareil mobile de l'objet (26).

3. Dispositif d'identification d'objets selon la revendication 1 ou 2, **caractérisé en ce que** l'équipement d'éclairage (2) du système de caméra (12), l'équipement d'éclairage supplémentaire (16) et/ou l'équipement d'éclairage du système de caméra supplémentaire comprend ou comprennent plus d'une source d'éclairage (3 - 3""), chaque source d'éclairage pouvant de préférence être activée, en particulier indépendamment les unes des autres, en fonction de l'état de l'objet (26), du véhicule automobile (10) et/ou de l'environnement du véhicule automobile (10) et/ou de la distance entre l'objet (26) et le système de caméra (12), en particulier le capteur du système de caméra, et/ou le système de caméra supplémentaire, en particulier le capteur du système de caméra supplémentaire.

4. Dispositif d'identification d'objets selon une des revendications précédentes,
**caractérisé en ce que**
l'équipement de commande ou de régulation modifie l'éclairage de différentes zones dans l'habitacle du véhicule automobile(10) en fonction de l'état de l'objet (26), du véhicule automobile (10) et/ou de l'environnement du véhicule automobile et/ou de la distance entre l'objet (26) et le système de caméra (12), en particulier le capteur du système de caméra (12), et/ou le système de caméra supplémentaire, en particulier le capteur du système de caméra supplémentaire.

5. Dispositif d'identification d'objets selon une des revendications précédentes, **caractérisé en ce que**
l'éclairage, la localisation et/ou l'identification d'objets et/ou l'activation d'au moins un des équipements d'éclairage (2, 16) et/ou systèmes de caméra (12) sont définis à partir de l'état de l'objet (26), défini par la taille, le poids, la respiration, les battements de coeur, la température, l'accélération, le mouvement et/ou la condition physique de l'occupant du véhicule.

6. Dispositif d'identification d'objets selon une des revendications précédentes,
**caractérisé en ce que**
l'équipement d'éclairage (2) du système de caméra (12), l'équipement d'éclairage du système de caméra supplémentaire, l'équipement d'éclairage supplémentaire (16), le système de caméra (12) et/ou le système de caméra supplémentaire sont montés ou intégrés dans un tableau de bord (14), une console centrale, en particulier une console centrale escamotable ou déplaçable, un pare-brise (17), un toit (20), une garniture de toit (22), une poignée de maintien (34, 34', 34"), un montant A (36), un montant B (38), un montant C (40), un composant de porte (42), au-dessus d'une porte, un boîtier (44), en particulier un boîtier en forme de dôme dans la zone du milieu de véhicule sur le toit (20) ou la garniture de toit (22), un équipement d'affichage (46), un siège d'occupant de véhicule (18), en particulier une partie tête (48), une partie pied et/ou un accoudoir (50) du siège d'occupant de véhicule (18), un système de retenue pour l'occupant du véhicule, un mécanisme de positionnement (52), en particulier un mécanisme de positionnement motorisé, un habillage et/ou l'appareil, en particulier sous la forme d'un appareil mobile de l'objet (26).

7. Dispositif d'identification d'objets selon la revendication 6, **caractérisé en ce que** l'équipement d'éclairage intégré dans l'équipement d'affichage (46) comprend des sources d'éclairage réparties sur une zone d'affichage de l'équipement d'affichage, les sources d'éclairage de l'équipement d'affichage comprenant des groupes d'émetteurs et/ou des régions avec différents domaines d'émission spectrale, qui sont adaptés pour pouvoir fournir de la lumière dans au moins une partie d'un domaine spectral utilisé pour l'identification d'objets, et/ou comprenant en plus des émetteurs spectraux pour le domaine spectral de l'identification d'objets.

8. Dispositif d'identification d'objets selon une des revendications précédentes,
**caractérisé en ce que**
le système optique (4) comprend des guidages et/ou des roues rotatives pour l'échange et/ou le déplacement de l'élément optique (5 - 5"") et/ou des moyens actionneurs aptes à induire des mouvements, et/ou l'élément optique (5 - 5"") du système optique (4) comprend des lentilles, des filtres, des instruments optiques adaptatifs, des éléments optiques actifs et/ou des miroirs.

9. Dispositif d'identification d'objets selon une des revendications précédentes,
**caractérisé en ce que**
l'éclairage peut être défini par le biais de la fréquence spectrale, l'amplitude, la durée, en particulier définies par la fréquence d'impulsion et/ou la durée d'impulsion, la polarisation et/ou l'intensité de l'éclairage, la fréquence spectrale étant de préférence au-dessus et/ou en dessous de la lumière visible.

10. Procédé servant à faire fonctionner un dispositif d'identification d'objets selon une des revendications précédentes, **caractérisé par**
un enregistrement de signaux et/ou de données, une localisation d'objets, une adaptation de l'éclairage de l'objet, une identification d'objets et/ou une génération d'instructions de commande.

11. Procédé selon la revendication 10, dans lequel
avant l'enregistrement de signaux et/ou de données, un enregistrement de données d'arrière-plan et/ou une liaison avec l'appareil, le capteur et/ou l'équipement sont effectués.

12. Véhicule automobile (10), en particulier véhicule automobile (10) autonome, comportant un dispositif d'identification d'objets selon une des revendications 1 à 9 et/ou adapté pour exécuter un procédé selon la revendication 10 ou 11.

13. Véhicule automobile (10) selon la revendication 12, **caractérisé en ce que** l'équipement est adapté pour la conduite autonome, et/ou
l'équipement de commande ou de régulation est adapté pour le réglage de la position de l'occupant du véhicule dans l'habitacle du véhicule, en particulier par le biais du siège d'occupant de véhicule (18), de l'équipement d'affichage (46), du tableau de bord (14), de la console centrale, en particulier une console centrale escamotable ou déplaçable, d'une ouverture de véhicule, d'un équipement d'avertissement, d'un équipement de chauffage, d'un équipement de climatisation, d'un système de navigation, d'une installation audio, d'une installation téléphonique, d'une installation vidéo, d'une installation holographique et/ou du mécanisme de positionnement (52).

14. Véhicule automobile (10) selon la revendication 12 ou 13, **caractérisé en ce que** le mécanisme de positionnement (52) est ou peut être mis en liaison fonctionnelle avec le siège d'occupant de véhicule (18), l'équipement d'affichage (46), le tableau de bord (14), la console centrale, l'ouverture de véhicule, l'équipement d'avertissement, l'équipement de chauffage, l'équipement de climatisation, le système de navigation, l'installation audio, l'installation téléphonique, l'installation vidéo et/ou l'installation holographique.
